# EUROPÄISCHE PATENTSCHRIFT

(11) **EP 0 481 014 B1**
(45) Veröffentlichungstag und Bekanntmachung des Hinweises auf die Patenterteilung: **22.02.1995**
(21) Anmeldenummer: 90917792.5
(22) Anmeldetag: 02.07.1990
(51) Int. Cl.: F16H 37/04

(54) **VIELSTUFIGES ZAHNRÄDERWECHSELGETRIEBE**
GEAR CHANGE BOX WITH MULTIPLE STEPS
BOITE DE VITESSE A ENGRENAGES A ETAGES MULTIPLES

(30) Priorität: 05.07.1989 DE 3922053
(43) Veröffentlichungstag der Anmeldung: 22.04.1992
(73) Patentinhaber: ZF FRIEDRICHSHAFEN Aktiengesellschaft, 88038 Friedrichshafen (DE)
(72) Erfinder: MÜLLER, Franz, D-7990 Friedrichshafen (DE); POLHENZ, Jürgen, D-7990 Friedrichshafen (DE); LEHLE, Hubert, D-7996 Meckenbeuren (DE); BAUR, Erwin, D-7990 Friedrichshafen (DE); SIMON, Herbert, D-7990 Friedrichshafen (DE)
(86) Internationale Anmeldenummer: EP9001056
(87) Internationale Veröffentlichungsnummer: WO9100445

(56) Entgegenhaltungen:
- EP-A- 0 262 625
- AU-A- 548 398
- DE-A- 2 219 242
- DE-A- 2 645 957
- GB-A- 2 063 395

## Beschreibung

Die Erfindung betrifft ein vielstufiges Zahnräderwechselgetriebe entsprechend den im Oberbegriff von Anspruch 1 genannten Merkmalen.

Zahnräderwechselgetriebe nach dem Gattungsbegriff sind allgemein bekannt und werden bei Traktoren und bestimmten Baufahrzeugen eingesetzt. Derartige Getriebe müssen für die verschiedensten Arbeitseinsätze stets eine geeignete Geschwindigkeit zur Verfügung stellen, da der Geschwindigkeit eine zentrale Bedeutung für die Produktivität zukommt. Eine Übersicht über die praktischen Arbeitsgeschwindigkeiten beim Einsatz von Traktoren findet sich bei K. T. Renius, Traktoren, Verlagsunion Agrar, 1985, Seite 93.

Ein weiteres vielstufiges Zahnräderwechselgetriebe ist aus der DE-A 26 45 907 bekanntgeworden. Es besteht im wesentlichen aus einer Eingangsgruppe, einem Zwischengetriebe und einer Hauptgruppe. Die Festräder der feingestuften Eingangsgruppe sind auf der Eingangswelle angeordnet und kämmen mit Losrädern auf einer ersten Vorgelegewelle. Den Losrädern sind Schaltkupplungen zugeordnet. In Verlängerung zur ersten Vorgelegewelle liegt die Antriebswelle der Hauptgruppe. Auf dieser Antriebswelle befinden sich Los- und Festräder, die mit Fest- bzw. Losrädern auf der Abtriebswelle in kämmender Verbindung stehen. Das Zwischengetriebe enthält Zahnradsätze für ein Kriechganggetriebe und ein Wendegetriebe. Die Gangstufen des Kriechganggetriebes können wahlweise zusammen mit dem Wendegetriebe geschaltet sein.

Mit steigender Anzahl der Gangstufen ergeben sich indessen erhebliche Baulängenprobleme. Weitere Schalthebel und auch die Anfahrkupplungen müssen beim Stand der Technik jedoch dann mitbetätigt werden, wenn zusätzliche, separate Schaltstufen wie Kriechgang, Schnellgang (Overdrive) oder Rückwärtsgänge zu schalten sind, weil deren Zahnradsätze und Schaltelemente außerhalb der Split- bzw. der Hauptgruppe in einer Zwischen- oder Zusatzgruppe angeordnet sind.

Die Schaltelemente in der Eingangsgruppe können wahlweise formschlüssige oder kraftschlüssige Kupplungen sein.

Bei diesem Stand der Technik sind die gesamten Massenkräfte aus den der Anfahrkupplung vor der Eingangsgruppe trieblich nachgeordneten Getriebestufen auch bei allen Schaltvorgängen direkt mit der Eingangsgruppe zu synchronisieren. Dabei arbeitet die Anfahrkupplung mit anderen Drehzahlen als die Schaltkupplungen in der Eingangsgruppe.

Auch ist nicht vorgesehen, die Vorwärtsgänge gleich schnell wie die Rückwärtsgänge fahren zu können. Die Notwendigkeit, in jedem Falle die Anfahrkupplung beim Schalten zu betätigen, erschwert die Bedienung. Bei der in Rede stehenden Konstruktion ist eine Zapfwelle nicht vorgesehen.

Um dem Verschleiß an den Reibflächen der Anfahrkupplung gerecht zu werden, war man bisher (z. B. DE-A 22 19 242) bemüht, trockene Anfahrkupplungen so anzuordnen, daß sich deren Reibflächen relativ bequem erneuern ließen. Weiter bemühte man sich, durch möglichst große Reibflächen und gute Kühlung - in der Regel mit Luft - sowie mit lebensdauerverlängernden geringeren spezifischen Belastungen auskommen zu können. Zudem wurde damit bewirkt, daß die bevorzugten luftgekühlten Anfahrkupplungen außerhalb der Getriebegehäuse einem ständigen Gebläseluftstrom ausgesetzt werden konnten. Diese Maßnahmen ergaben indessen, weiteren Einbauraumbedarf für die großen Trockenkupplungen und führten auch zu weiterem Energieverbrauch für die ständige Zwangsluftkühlung, was den Gesamtwirkungsgrad der Maschinen beeinflußt.
Hinzu kam, daß zum Abbremsen bzw. Beschleunigen der größeren Massen so lange Schaltzeiten und so hohe Schaltkräfte nötig wurden, daß sich sowohl der Bedienungskomfort als auch die Fahrsicherheit mit zunehmenden Fahrzeugleistungen verringerte. Man bemühte sich, diesen Umständen zwar durch Verwendung von Lastschaltkupplungen anstelle Synchronkupplungen zu begegnen. Wenn man die Lastschaltkupplungen aber genau wie die Synchronkupplungen nebeneinander aufreiht, erwies sich die damit verbundene Baulängen-Zunahme jedoch als aufwendig für viele Fahrzeugkonstruktionen.

Der vorliegenden Erfindung liegt die Aufgabe zugrunde, ein vielstufiges Zahnräderwechselgetriebe zu schaffen, das mit Lastschaltkupplungen möglichst kurz baut und leicht bedienbar ist, sich insbesondere für Traktoren mit großen Geschwindigkeitsbereichen bei gutem Wirkungsgrad einsetzen läßt. Die Schaltvorgänge in der Eingangsgruppe sollen unbelastet bleiben von nachgeordneten Massen in der Hauptgruppe sowie ggf. in einem separat schaltbaren Zwischengetriebe.
Ferner soll die Anfahrkupplung den Belastungen bei kleinem Raumbedarf gewachsen sein, ohne daß dazu erhöhte Schaltzeiten oder vermehrte Hilfsenergien gebraucht würden.

Zur Lösung der gestellten Aufgabe werden die im Anspruch 1 aufgeführten Merkmale vorgeschlagen:
- Dadurch, daß die aus der Eingangswelle heraustretende Zapfwelle achsparallel entlang der Hauptgruppe bis in den Bereich der Getrieberückseite weitergeführt wird, bestehen dort günstige Unterbringungsmöglichkeiten für weitere, auch problemlos nachrüstbare Nebenabtriebe, ohne die eigentliche Eingangswelle verändern oder sonstwie in das Getriebe eingreifen oder dafür axiale Erweiterungen des Getriebegehäuses vornehmen zu müssen.
- Mit der erfindungsgemäß trieblich und baulich der Eingangsgruppe und einer dem eventuell eingeplanten Zwischengetriebe nachgeordneten speziell reibungsarmen, und vor die hochgelegene Hauptgruppen-Antriebswelle gelegten Anfahrkupplung können die Lastschaltkupplungen der Eingangsgruppe von den Massenkräften aus der mit schnell drehenden zahnradstufen bestückten Hauptgruppe wirksam entlastet werden, ohne daß die Kupplung Pantschverluste verursacht. Die Massenkräfte aus der Eingangsgruppe bzw. dem Zwischengetriebe brauchen dabei nur noch zum Antriebsmotor hin synchronisiert werden, was wegen ihren gegenüber der Hauptgruppe niedrigeren Drehzahlen weniger schwierig ist, als wenn zusätzliche Massenkräfte aus den schnelldrehenden Wellen zu den Rädern hin zu synchronisieren wären, wie bei Anfahrkupplungen, die vor die Eingangsgruppe gelegt sind. Der Verzicht auf eine große Trockenreibungskupplung und der Übergang auf eine nasse, mit Umlauföl, zumindestens während des Schließens zwangsgekühlte Mehrscheiben-Lamellenkupplung bringt eine Verringerung des Schleppmomentes beim Auskuppeln und leichtere Synchronschaltungen sowie eine ganz erhebliche Lebensdauerverlängerung bei minimalem axialem Bauraumbedarf im eigentlichen Getriebegehäuse mit sich. Da die Kupplung weder durch Überhitzungen noch Verschmutzungen oder gar (wie bei außenliegenden Trockenkupplungen) eventuell durch mechanische Beschädigungen von außen infolge von Steinschlag etc. gefährdet ist, erhöht sich die Betriebssicherheit des Getriebes weiter. Die Anfahrkupplung verursacht dabei nicht ständig Pantschverluste, da sie außerhalb des Ölspiegels umlaufen kann. Da vorgesehen ist, die Ölkühlung der Reibfläche der Anfahrkupplung durch ein kupplungsabhängig beim Auskuppeln schließendes Ölventil abzusperren, werden kleinstmögliche Lamellenschleppmomente und leichtes und schnelles Schalten erreicht.

Weitere vorteilhafte Ausgestaltungen werden durch die Unteransprüche angegeben:
- Durch die vorgeschlagene Ausbildung der Eingangsgruppe sind beim Schalten derselben keine Drehzahlunterschiede zwischen Schalt- und Anfahrkupplung zu erwarten.
- Der Einsatz von Lastschaltkupplungen in der Eingangsgruppe erlaubt eine Kurzbauweise.
- Der Rückwärtsgang benötigt keinen eigenen axialen Bauraum und ist über die gleiche Gangwähleinrichtung wie die übrigen Splitgänge einlegbar. Die Rückwärtsgangkupplung kann zudem durch die Integration in die Eingangsgruppe ohne Vergrößerung der Getriebebaulänge als Doppelkupplung ausgeführt und somit die Zahl der möglichen Rückwärtsgänge erhöht werden.
- Bei Verwendung von Lastschaltkupplungen mit je einer Kupplungsglocke auf jeder der Wellen der Eingangsgruppe ist ein Wechsel der Splitgänge ohne Betätigung der Anfahrkupplung möglich.
- Bei Anordnung von Synchronschaltkupplungen lediglich auf der ersten Vorgelegewelle entfällt jeglicher Drehzahlunterschied zu der dazu koaxialen Primärwelle der Anfahrkupplung, so daß von daher keine Synchronisierarbeit zusätzlich aufzubringen ist.
- Mit der Möglichkeit, eine rein mechanisch betriebene Not-Fahrantriebsverbindung vorzusehen, kann z. B. schon allein mittels einer einfachen Klauen-Zuschaltkupplung auf der Eingangswelle noch ein manuell einlegbarer Formschluß von der Primärwelle der Anfahrkupplung zur Hauptgruppen-Antriebswelle geschaffen werden. Damit wird ein Anschleppen des Fahrzeuges bzw. ein Notbetrieb mit Eigenkraft über die Hauptgruppen-Gänge selbst dann noch vorwärts und rückwärts möglich, wenn z. B. wegen eines Defektes in der Strom- oder Hydraulik-Versorgung hilfskraftbetätigte Schaltkupplungen in der Eingangsgruppe sich nicht mehr öffnen lassen.
- Dadurch, daß ein zum Einbau einer Schaltkupplung ausreichender Freiraum zwischen der ersten Gehäusezwischenwand und der Anfahrkupplung auf jeden Fall vorgesehen und die Verbindung der ersten Vorgelegewelle und der Primärwelle der Anfahrkupplung durch eine auswechselbare Wellenmuffe hergestellt wird, besteht die Möglichkeit, bei Bedarf ein Zwischengetriebe ohne grundsätzliche Aufbauänderung oder Verlängerung des Getriebes bzw. der Kupplung vorzusehen und alle dazu benötigten Teile stets identisch auszuführen.
- Indem man die Mittenachsen von Eingangswelle, Vorgelegewelle und Umkehrwelle in einem gleichseitigen Dreieck anordnet, kann gesichert werden, daß bei Vor-und Rückwärtsfahrt exakt gleiche Drehzahlen bzw. Geschwindigkeiten der verschiedenen Gänge erreicht werden und noch mehr baugleiche Bauelemente verwendbar werden.
- Bei Ausgestaltung des Zwischengetriebes als Kriechgang ist mit einer bestimmten Übersetzungswahl sowohl eine Geschwindigkeit von nur ca. 0,3 bis 0,4 km/h möglich als auch radial unterhalb des Zwischengetriebes noch Platz für eine Wellenbremse im Vorderachs-Antrieb.
- Mit einer schalenförmigen unteren Ausbuchtung wird die erste Gehäusezwischenwand versteift und vermieden, daß das in der Regel leer mitlaufende Festrad des Zwischengetriebes ungünstige Schleppmomente im Ölinhalt des Getriebegehäuses auslöst.
- Durch Ausgestaltung der Anfahrkupplung mit einem eine hauptgruppenseitig axial offene Ringtasche bildenden und Radialbohrungen aufweisenden Innenlamellenträger kann z. B. durch ein mit der Kupplung kombiniertes Ventil an sich bekannter Art eine auf die Kupplungs- Schließzeiten beschränkte Öleinspritzkühlung günstig realisiert werden. Dabei kann entweder eine Ölzufuhrsteuerung mittels eines an die Pumpendruckleitung angeschlossenen Ölventiles oder durch in die Kupplung integrierte Schließelemente erfolgen. Beide Ausführungen erlauben es, die Kühlölzufuhr nur beim Einrücken des Kupplungspedales zu aktivieren. So werden Energieersparnisse durch Reduzierung der Pantschmomente und der Pumpenleistung ohne Beeinträchtigung der Anfahrkupplungs-Standzeiten bei niedrigsten Schleppmomenten während Kupplungsöffnungen erreicht.
- Eine Wellenbremse nach der Zuschaltkupplung für den Vorderachs-Antrieb läßt sich insbesondere unter Abstützung von deren Außenmantel in einer herausnehmbaren ersten Gehäuse-Zwischenwand oder im Frontdeckel des Getriebes in montage- und betriebsgünstiger Anordnung fakultativ vorsehen.
- Auch der Einbau einer eventuell mehrgängigen Zapfwelle axial über der Hauptgruppe ist ohne nennenswerte Baulängenvergrößerung möglich, da hierfür über der Hauptgruppe Bauraum frei ist.
- Schließlich ist auf der Zapfwelle noch Platz für ebenfalls eventuell nachträgliche Anbringung eines wegabhängigen Zapfwellen-Antriebes mit Antrieb von einem der Räder auf der Antriebswelle der Hauptgruppe.
- Durch Begrenzung des Ölspiegels auf ein Niveau niedriger als die Achsmitte der Hauptgruppen-Abtriebswelle und durch von der zentralen Pumpe versorgte Schmierungskanäle innerhalb der Wände und der Wellen werden alle Schmierstellen zuverlässig erreicht, ohne daß die Pantschmomente infolge ständig überfluteter Getriebeteile unnötig ansteigen.
- Für die Montage und Wartung ist es günstig, daß die Abmessungen der ersten Gehäusezwischenwand durch eine antriebsseitige Gehäuseöffnung passen und diese Zwischenwand an einem inneren Gehäuseflansch axial vor der zweiten Wand zuverlässig lösbar/befestigbar ist.

Die Erfindung ist nicht auf die Merkmalskombination der Ansprüche beschränkt. Für den Fachmann ergeben sich weitere sinnvolle Kombinationsmöglichkeiten von Ansprüchen und einzelnen Anspruchsmerkmalen aus der Aufgabenstellung. Die Erfindung wird nachfolgend anhand eines Ausführungsbeispieles näher beschrieben unter Bezug auf die folgenden Zeichnungen:
- Fig. 1: zeigt schematisch ein vielstufiges Zahnräderwechselgetriebe in der für höhere Leistungen bevorzugten Ausführung mit vertikal zueinander fluchtenden Lastschaltkupplungen und Rückwärtsgang in der Eingangsgruppe;
- Fig. 2: zeigt schematisch als Auszug des gleichen Getriebekonzeptes eine für niedrigere Leistungen bevorzugte Ausführungsart der Eingangsgruppe mit nebeneinander angeordneten Synchronkupplungen lediglich auf der Vorgelegewelle;
- Fig. 3 und 4: zeigen als konstruktive Ausführungsbeispiele die Gestaltung eines Anfahrkupplungsbereiches einmal ohne ein Zwischengetriebe, aber mit Einbauplatz dafür und einmal als Kriechgang;
- Fig. 5: zeigt eine bauraumsparende und servicegünstig gestaltete Vorderansicht eines Gehäusedeckels;
- Fig. 6: zeigt eine schematische Darstellung der Abstandsverhältnisse und Zuordnungen der Getriebewellen zueinander in Frontansicht entgegen der Fahrtrichtung;
- Fig. 7: zeigt eine schematische Seitenansicht eines Einhand-Hebelwendeschalters der Eingangsgruppe bei Ausrüstung mit Lastschaltkupplungen;
- Fig. 8: zeigt das Schaltbild des Hebels ohne die von dessen Endstellungen unabhängig betätigbaren diversen Schaltpunkte des integrierten Wippschalters;
- Fig. 9: zeigt die mit dem Beispiel gemäß Fig. 1 erreichbare Gangwahl-Folge in Tabellenform.

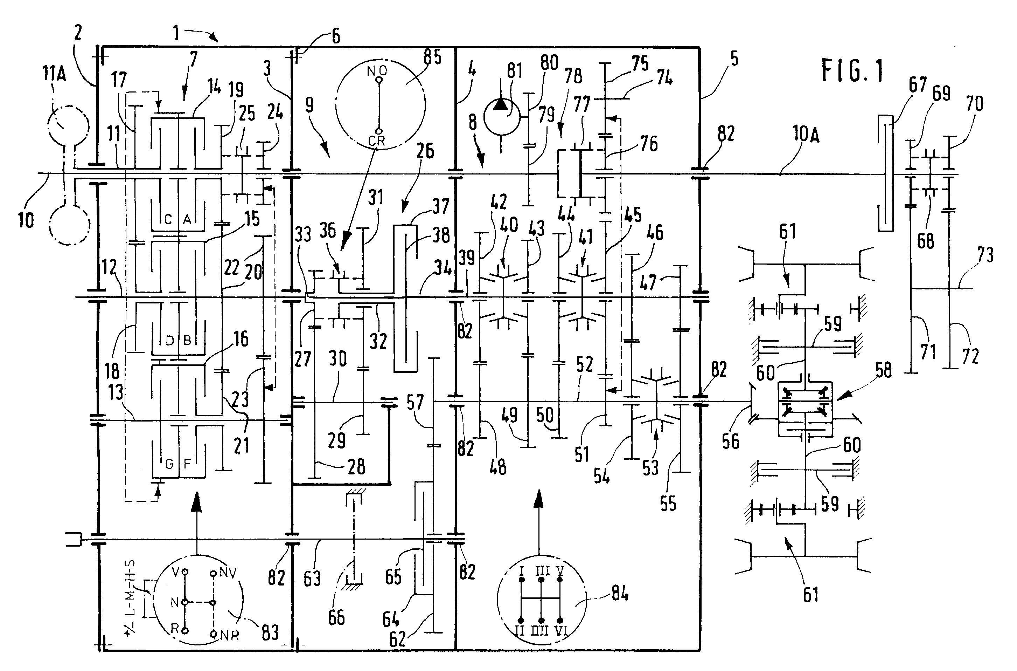

In Fig. 1 ist das gemeinsame Gehäuse 1 mit dem motorseitigen Gehäusedeckel 2 und einer ersten und zweiten Gehäusezwischenwand 3 und 4 sowie einer Gehäuserückseite 5 des Gehäuses 1 schematisch dargestellt. Die aus dem Gehäuse nach dem Lösen von einem Gehäuseflansch 6 durch den Gehäusedeckel 2 herausnehmbare Gehäusezwischenwand 3 erlaubt den Zugriff zu den höchstbeanspruchten Bauteilen einer Eingangsgruppe 7, ohne eine hinter der zweiten Gehäusezwischenwand 4 gelegene Hauptgruppe 8 dazu öffnen zu müssen. Baulich und trieblich zwischen Eingangsgruppe 7 und Hauptgruppe 8 ist ein Freiraum für ein Zwischengetriebe 9 vorgesehen, welches im Beispiel aus einer Kriechgangstufe besteht. Die Hauptgruppe 8 kann damit insbesondere zwischen der Gehäuserückseite 5 und der Gehäusezwischenwand 4 völlig fertig montiert werden, ehe ein Zwischengetriebe 9 oder eine Eingangsgruppe 7 installiert werden.
Da die Einbaugruppen-Geometrien so gewählt werden, daß wahlweise Lastschalt-Kupplungen A, B, C, D, F, G oder Synchronkupplungen 18C, 20C zum Einsatz gelangen können, ist die endgültige Ausrüstungs-Entscheidung erst in der Montage-Endphase nötig.
Die Eingangsgruppe 7 weist außer einer Eingangswelle 11 noch eine die Hauptgruppe 8 antreibende erste Vorgelegewelle 12 und eine Umkehrwelle 13 für Rückwärtsfahrt auf. Auf jeder dieser Wellen befindet sich je eine als Doppelkupplung ausgebildete Lastschaltkupplung CA, DB und GF, an sich gleicher Bauart und Größe, deren Kupplungsglocken 14, 15, 16 drehbar gelagert sind und welche über äußere Verzahnungen miteinander direkt bzw. indirekt in Eingriff stehen. Und zwar steht die Kupplungsglocke 14 sowohl mit den Kupplungsglocken 15 und 16 ständig in Eingriff, nicht aber die Kupplungsglocke 15 mit Kupplungsglocke 16. Zu diesem Zwecke sind die Wellen der Eingangsgruppe 7 in einem gleichseitigen Dreieck angeordnet und die Außenverzahnung der Kupplungsglocke 15 läuft an der Außenverzahnung der Kupplungsglocke 16 leer vorbei, kämmt aber, wie auch die Außenverzahnung der Kupplungsglocke 16 mit der Außenverzahnung der Kupplungsglocke 14. Jede Kupplungsglocke ist durch einen sie auf ihrer Nabe tragenden radialen Steg axial in zwei gleiche Reiblamellenpakete unterteilt, die durch hier nicht besonders gekennzeichnete separate Hydraulikkolben einzeln oder gemeinsam mittels Druckmittelbeaufschlagung aus gegen Öffnungsfederkräfte aktivierbar sind.
Die Innenlamellenträger sind entweder mit der jeweiligen Welle 11, 12, 13 direkt, wie bei den Lastschaltkupplungen B und G, oder indirekt von einer auf der jeweiligen Welle 11, 12, 13 drehbaren Nabe bzw. Hohlwelle mitnehmbar, wie bei den Lastschaltkupplungen C, A, D und F.
Dabei ist die den Innenlamellenträger der Kupplung C tragende Hohlwelle die Eingangswelle 11, welche über einen beliebigen Schwingungsdämpfer 11A von einer Hauptantriebswelle 10 angetrieben wird, sobald der nicht gezeigte Motor läuft. Die Eingangswelle 11 nimmt dabei ein den Durchmesser der Kupplungsglocke 14 überragendes und dieser antriebsseitig vorgeordnetes Losrad 17 in Drehrichtung mit, welches mit einem der Kupplungsglocke 15 antriebsseitig vorgelagerten Losrad 18 und dem damit durch eine gemeinsame Nabe verbundenen Innenlamellenträger der Lastschaltkupplung D auf der Vorgelegewelle 12 in treibender Verbindung steht. Abtriebsseitig ist der Kupplungsglocke 14 ein mit deren Innenlamellenträger durch eine gemeinsame Nabe verbundenes weiteres Losrad 19 vorgeordnet, das in Eingriff steht mit einem den Durchmesser der Kupplungsglocke 15 überragenden Festrad 20 auf der in die Hauptgruppe 8 weiterführenden Vorgelegewelle 12 bzw. mit einer zu dieser koaxialen Primärwelle 32. Das Festrad 20 kämmt dabei mit einem auf der Umkehrwelle 13 abtriebsseitig von der Kupplungsglocke 16 vorgesehenen und mit deren Innenlamellenträger über eine gemeinsame Nabe verbundenen kleineren Losrad 21.
Auf der Vorgelegewelle 12 ist dem Festrad 20 abtriebsseitig noch ein weiteres, etwas kleineres Festrad 22 nachgeordnet, das in Eingriff steht mit einem auf der Umkehrwelle 13 befestigten und dem Losrad 21 abtriebsseitig nachgeordneten Festrad 23 mit einem den Durchmesser der Kupplungsglocke 16 überragenden Durchmesser. Mit diesem Festrad 23 kämmen im Beispiel weiterhin noch ein dem abtriebsseitigen Losrad 19 der Kupplungsglocke 14 sowie ein nachgeordnetes kleineres Losrad 24, welches mittels einer Schiebemuffe 25 und entsprechenden Kupplungsverzahnungen in Formschluß bringbar ist mit der Hauptantriebswelle 10. Die gleiche Schiebemuffe 25 kann auch einen Formschluß herstellen von der Hauptantriebswelle 10 zum Losrad 19 nach der abtriebsseitigen Kupplungsglocke 14. Damit wird eine entweder vor- oder rückwärts, je nach Stellung OV/OR betreibbare Bypass-Triebverbindung zur Umgehung der von funktionierenden Strom- und Hydraulikversorgungen abhängigen Lastschaltkupplungen erreicht, wodurch Anschleppen oder ein mechanischer Not-Fahrbetrieb über die Gänge der Hauptgruppe 8 möglich wird. Diese Einrichtung mit den Rädern 22, 23, 24, 25 ist bei Verwendung von Formschluß- bzw. Synchronkupplungen in der Eingangsgruppe 7 nicht erforderlich, weil dann ein Strom- oder Hydraulik-Ausfall nicht zur Totalblockierung der Kupplungen führen kann.

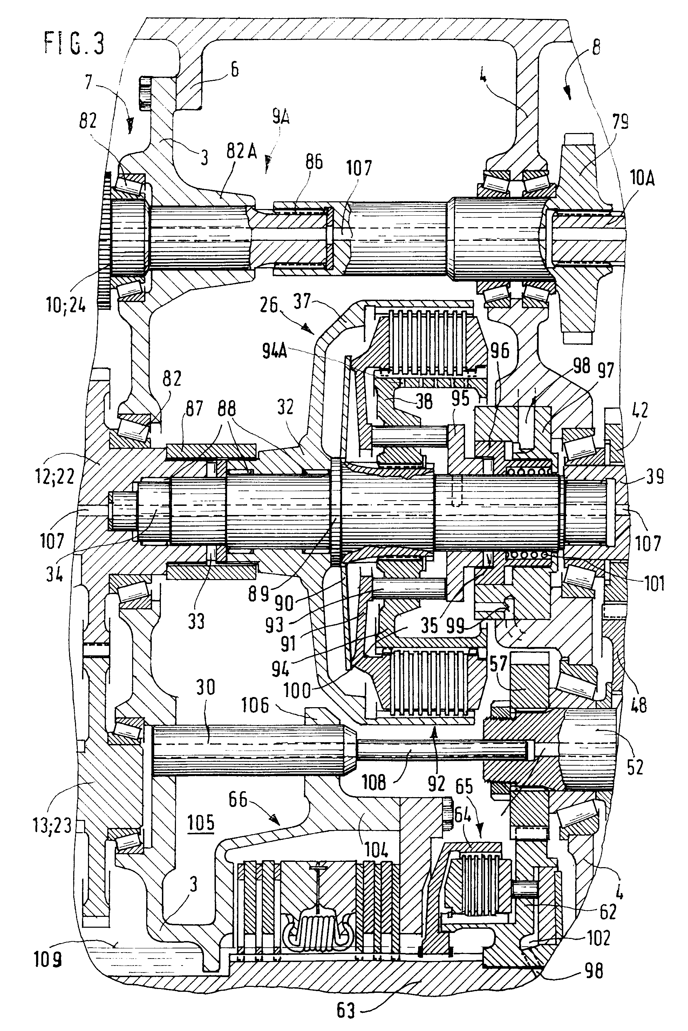

Das im Beispiel erfindungsgemäß axial zwischen der Eingangsgruppe 7 und einer der Hauptgruppe 8 unmittelbar vorgeordneten Anfahrkupplung 26 angeordnete Zwischengetriebe 9 kann auf Wunsch ohne Gehäuseänderungen weggelassen werden, wenn kein Kriech- oder Schnellgang (Overdrive) erforderlich ist. Das Zwischengetriebe besteht im ersteren Falle im wesentlichen aus einem kleinen Festrad 27 abtriebsseitig von der ersten Gehäusezwischenwand 3 auf der ersten Vorgelegewelle 12, welches ein Doppelzahnrad 28, 29 auf einer zur Anfahrkupplung 26 parallelen Zwischenwelle 30 treibt, deren Enden in der ersten und der zweiten Gehäusezwischenwand 3, 4 gelagert sind. Das Doppelzahnrad 28, 29 hat im Falle des Kriechganges ein großes antriebsseitiges und ein kleines abtriebseitiges Rad 28 bzw. 29. Das letztere treibt hier ein großes Losrad 31 auf der Primärwelle 32 der Anfahrkupplung 26. Diese Primärwelle 32 fluchtet sowohl koaxial zur Vorgelegewelle 12, mit der es ein Axiallager 33 (Fig. 3) gemeinsam hat, als auch mit einer Sekundärwelle 34 der Anfahrkupplung 26. Dabei ist die Primärwelle 32 mittels eines weiteren Axiallagers 35 (Fig. 3) vor dem Innenlamellenträger der Anfahrkupplung 26 innerhalb deren Gehäuse ein weiteres Mal gelagert bzw. axial abgestützt. Axial zwischen Festrad 27 und Losrad 31 befindet sich dann eine mit der Primärwelle 32 drehfeste Schiebemuffe 36 und auf den ihr zugewandten Innenflächen des Fest- und Losrades 27, 31 entsprechende Kupplungsverzahnungen. Damit kann die Schiebemuffe 36 bei Eingriff in das Festrad 27 einen Direktdurchtrieb von dort in die Primärwelle 32 ohne Über- bzw. Untersetzung bewirken, oder - bei Eingriff in das Losrad 31 einen durch die Zwischenwelle 30 gehende über- bzw. untersetzten Durchtrieb bewirken, mit dem alle Gangsprünge des Zahnradwellengetriebes im gewählten Verhältnis vergrößert bzw. verkleinert werden.

Die Primärwelle 32 treibt im Beispiel direkt die Kupplungsglocke 37 der Anfahrkupplung 26, welche als Außenlamellenträger einer bei Betätigung zwangsgekühlten, nassen Bremse mit Innenlamellen 38 auf der Sekundärwelle 34 gestaltet ist.
Diese Sekundärwelle 34 ist im Beispiel das antriebsseitige, aus der zweiten Gehäusetrennwand 4 herausragende Ende der Antriebswelle 39 der Hauptgruppe 8. Auf dieser Welle sind zwei Synchronkupplungen 40, 41 mit von ihren angetriebenen Muffenträgern mitnehmbaren beidseitigen Losrädern 42, 43 und 44, 45 sowie zwei jeweils benachbarte Festräder 46, 47. Die Losräder kämmen dabei mit Festrädern 48, 49, 50, 51 auf einer als Antriebswelle 52 der Hauptgruppe 8 dienenden zweiten Vorgelegewelle, auf deren einem Ende sich noch eine dritte Synchronkupplung 53 mit drehfestem Muffenträger und zugeordneten Losrädern 54, 55 befindet, welche mit den beiden Festrädern 46, 47 auf der Antriebswelle 39 kämmen. Die Antriebswelle 52 hat im Beispiel an ihren beiden Enden je ein Abtriebsrad 56, 57.
Das abtriebsseitige, aus der Gehäuserückseite 5 herausragende Wellenende treibt ein Kegelrad, und dieses treibt ein Tellerrad eines sperrbaren Achsdifferentiales 58, das einerseits mit Bremsen 59 versehene Hinterachswellen 60 mit Radkopfplanetengetrieben 61 antreibt. Das antriebsseitig aus der zweiten Gehäusezwischenwand 4 hervorragende Abtriebsrad 57 ist ein Stirnrad, das ein Losrad 62 auf einer Vorderachs-Antriebswelle 63 antreibt. Das Losrad 62 nimmt auch die Kupplungsglocke einer als Außenlamellenträger gestalteten Vorderachs-Zuschaltkupplung 64 mit. Deren Innenlamellenträger 65 ist mit der Vorderachs-Antriebswelle 63 drehfest, welche unterhalb der Eingangsgruppe 7 verlaufend, an deren Stirnseite wieder aus dem Gehäusedeckel 2 austritt. Dabei verbleibt im Zwischenachsgetriebe 9 unter dem Doppelzahnrad 28, 29 noch Platz, um auf der Vorderachs-Antriebswelle 63 abtriebsseitig von der Vorderachs-Zuschaltkupplung 64 noch eine Bremse 66 anzuordnen, welche in diesem Schema nur strichpunktiert angedeutet ist.

Die im oberen Teil des Gehäuses 1 gelegene Hauptantriebswelle 10 ist im Bereich der Eingangsgruppe 7 von der Eingangswelle 11 umgeben. Sie setzt sich außerhalb der Eingangsgruppe 7 als Vollwelle bis über die Getrieberückseite 5 hinaus und bis in eine an sich beliebig ausführbare Zapfwellen-Zuschaltkupplung 67 fort.

Im Beispiel ist der Zapfwellen-Zuschaltkupplung 67 eine Doppelkupplung mit drehfestem Muffenträger 68 und nebengeordneten unterschiedlich großen Losrädern 69, 70, welche mit unterschiedlich großen Festrädern 71, 72 auf einer Nebenwelle 73 in Eingriff stehen. Damit wird es möglich, je nach Schaltrichtung der Schiebemuffe über die Räder 69, 71 bzw. über 70, 72 die Nebenwelle 73 indirekt untersetzt mit wahlweise zwei weiteren Geschwindigkeiten anzutreiben.
Auf dem an sich frei und getriebeunabhängig verlaufenden Teilstück der Hauptantriebswelle 10 abtriebsseitig von der Eingangsgruppe 7 sind weitere diverse Nebenabtriebe direkt anschließbar. So kann z. B. der vorgeschilderte, mit Motordrehzahl antreibbare Zapfwellenantrieb wahlweise auch durch einen Abtrieb von einem schnell drehenden Festrad 51 auf der Abtriebswelle 52 der Hauptgruppe 8 über ein auf einer Nebenwelle 74 geführtes Zwischenrad 75 ein von der Hauptantriebswelle 10 abkoppelbares Losrad 76 und einen zugeordneten Muffenträger 77 einer Abschaltkupplung 78 mit der am Ausgang der Hauptgruppe herrschenden Geschwindigkeit getrieben und das dabei von der Hautpwelle 10 abgetrennte abgangsseitige Teilstück der Hauptantriebswelle als wegabhängige Zapfwelle 10A genutzt werden.

Auch der zentrale Pumpenantrieb für das Zahnradwechselgetriebe ist vorzugsweise auf der Hauptantriebswelle 10 oberhalb der Hauptgruppe 8 angeordnet, indem ein der Abschaltkupplung 78 vorgeordnetes Festrad 79 ein Gegenrad 80, das einerseits die Pumpe 81 antreibt, mitnimmt. Alle Wellen 10, 10A, 12, 13, 30, 34 bzw. 39, 52 und 63 sind in den Gehäusezwischenwänden 3, 4 bzw. der Gehäuserückseite 5 oder dem Gehäusedeckel 2 in Lagern 82 reibungsarm gelagert und aus den Wellen heraus mittels Bohrungen in dortige Ölkanäle zwangsgeschmiert.

Die Betätigungsweise der Kupplungen in der Eingangsgruppe 7 ist an sich beliebig, hier jedoch vorgesehen mittels eines Drehhebels 112, 113 mit Gangwähler 83 und integriertem Wippschalter 112 für Arbeitseinsätze, wodurch die Stellungen für Vorwärtsfahrt V, Neutral N, Rückwärtsfahrt R in den Stufen für LANGSAM L, MITTEL M, HOCH H und für SCHNELL S sowie ggf. und nach Lösen einer hier nicht dargestellten Sperre auch die bei Lastschaltkupplungen vorgeschlagene Not-Fahrschaltung für Vorwärts V oder Rückwärts R mit dem gleichen Gangwähler 83 eingelegt werden können.

Die Straßenfahrt-Gangwahl über Schalthebel 84 kann während des Arbeitseinsatzes an sich unverändert bleiben. Falls das Zwischengetriebe 9 installiert wird, kann dessen Zuschaltkupplung 36 über einen weiteren Schalthebel 85 mit zwei Endstellungen in den Kriech- bzw. Schnellgang gelegt werden.
Alle diese Schaltungen sind je nach Komfortwünschen auch elektro- bzw. servo-betätigt auf an sich bekannte Weise ausführbar. Auch die Automatisierung der Lastschaltkupplungen ist mit geringen Mehrkosten möglich.

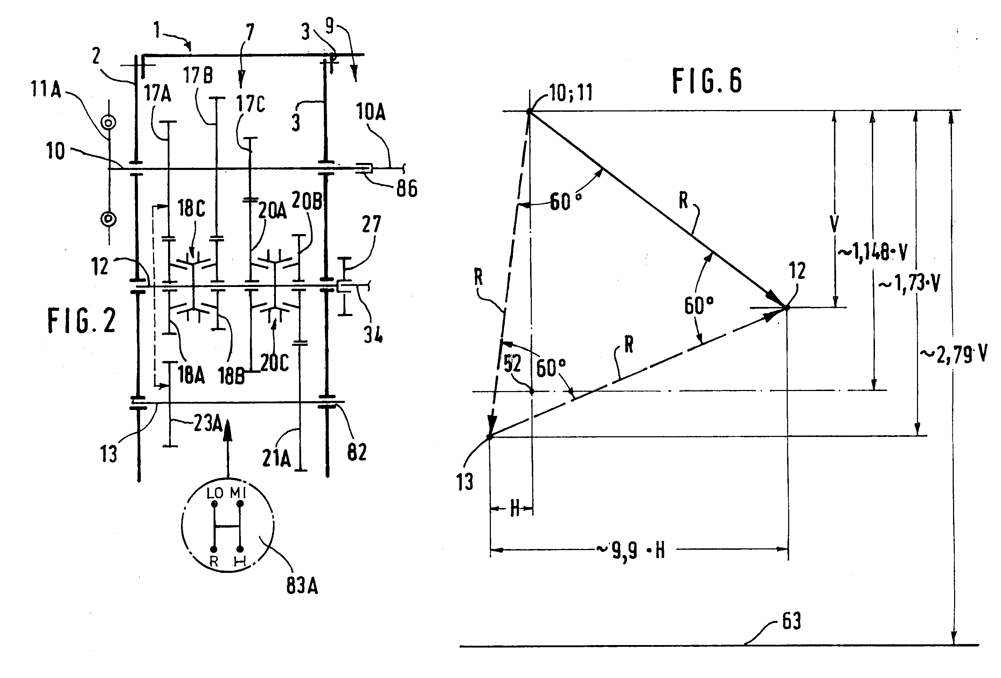

In Fig. 2 ist die Eingangsgruppe 7 zwar mit prinzipiell gleicher Anordnung der Wellen 10, 11, 12, 13 wie bei der Bestückung mit Lastschaltkupplungen ausgeführt, jedoch ohne die mechanische Not-Fahrschaltung. Die Antriebsverbindungen für die Doppelkupplungen C, A und D, B bestehen hier lediglich aus auch mechanisch betätigbaren Synchronkupplungen 18C und 20C, welche dank der erfindungsgemäßen Gestaltung des Zahnradwechselgetriebes auch noch bei mittleren Momenten bzw. Leistungen ausreichen und selbst bei eingelegtem Kriechgang noch leicht schaltbar sind sowie einen geringeren Steuerungsaufwand als mit Lastschaltkupplungen voraussetzen. Bei weitgehender Baugleichheit ergibt sich eine gute Austauschbarkeit dank vieler Teile, die mit denjenigen in der Lastschaltgetriebe-Ausführung übereinstimmen.
Ein in die Eingangsgruppe 7 voll integrierter Rückwärtsgang wird durch eine Einrastung der Synchronkupplung 20C wie die übrigen Gänge eingelegt und ist somit auch bei dieser Ausführung ebenso leicht schaltbar. Die Hauptantriebswelle 10 ist in diesem Beispiel nicht von einer hohlwellenartigen Eingangswelle 11 umgeben, sondern nach einem einfachen Schwingungsdämpfer 11A als eine die Naben der Festräder 17A, 17B und 17C direkt mitnehmende Vollwelle, welche für eine Fortsetzungswelle zu einem Zapfwellenanschluß im Bereich des Lagers 82 in der ersten Gehäusezwischenwand 3 eine Steckmuffenverbindung 86 (s. Fig. 3) aufweist. Die Festräder 17A und 17B kämmen mit Losrädern 18A und 18B beidseits eines auf dem antriebsseitigen Ende der ersten Vorgelegwelle 12 festen Schiebemuffenträgers. Das Festrad 17C kämmt mit dem antriebsseitigen Losrad 20A der abtriebsseitigen Synchronkupplung 20C. Auf der ersten Vorgelegewelle 12 befindet sich ein drehfester Schiebemuffenträger, auf dessen Abtriebsseite sich ein Losrad 20B befindet, das mit einem Festrad 21A auf der parallel zur ersten Vorgelegewelle 12 liegenden Umkehrwelle 13 kämmt.
An deren antriebsseitigem Ende befindet sich ein weiteres Festrad 23A, das noch vom Festrad 17A auf der Hauptantriebswelle 10 mit angetrieben wird. Die Umkehrwelle 13 ist hier mit einem durch ihr Lager 82 in der ersten Gehäusezwischenwand 3 hindurchtretenden Wellenstummel versehen, auf welchem bei Einbau eines Zwischengetriebes 9 dessen Welle 30 mit dem Doppelzahnrad 28, 29 konzentrisch gelagert ist.

Eine Bremse 66 ist nicht an einer Gehäusewand 3 oder 4, sondern am Gehäusedeckel 2 gehaltert, so daß radial unter der Zwischenwelle 30 Bauraum für ein eventuell größeres Doppelzahnrad 28, 29 bleibt, für den Fall, daß eine Overdrive-Übersetzung gefordert ist.

In Fig. 3 ist der Gehäuse-Innenbereich von der ersten bis zweiten Gehäusezwischenwand 3, 4, in welchem die Anfahrkupplung 26 liegt, ohne das dort zum fakultativen Einbau vorgesehene Zwischengetriebe 9 konstruktiv dargestellt. Für das Zwischengetriebe 9 ist hier jedoch ein für dessen zusätzlichen Axialplatzbedarf entsprechender Freiraum 9A freigelassen.
Die Hauptantriebswelle 10 ist in der ersten Gehäusezwischenwand 3 in einem Lager 82 geführt, in dessen Hals 82A sich nicht dargestellte Ölzufuhrkanäle zu Schmierstellen und Kupplungszylindern etc. befinden. Abtriebsseitig vom Lagerhals 82A endet die Hauptantriebswelle 10 in einem außenverzahnten Wellenstummel, der etwa radial über der Anfahrkupplung 26 liegend in ein hohles Ende der Zapfwelle 10A drehfest eingesteckt ist und so eine leicht lösbare Steckmuffenverbindung darstellt und die Veränderungen an der Zapfwelle 10A erleichtert.

Eine andere drehfeste, aber axial begrenzt verschiebliche Steckverbindung 87 mit integriertem Axial- und Radiallager 33 ist bei der Verbindung von der ersten Vorgelegewelle 12 zur Sekundärwelle 34 der Anfahrkupplung 26 vorgesehen.
Dort ist die Sekundärwelle 34 in ein hohles Ende der Vorgelegewelle 12 drehbeweglich eingesteckt. Auf den außenverzahnten Wellenstummel der Vorgelegewelle 12 ist bei weggelassenem Zwischengetriebe 9 eine weitere Steckverbindungsmuffe 87 geschoben, die ein antriebsseitiges Axiallager 33 der von ihr mitgenommenen Nabe der Kupplungsglocke 37, die auf der Sekundärwelle 34 Rollenlager 88 hat, von außen umfaßt. Abtriebsseitig der als Primärwelle 32 dienenden Nabe der Kupplungsglocke 37 liegt diese axial gegen einen Stützbund 89 auf der Sekundärwelle 34 an. Auf dessen Abtriebsseite ist eine Tellerfeder 90 mit ihrem Innenrand anliegend, deren Außenrand gegen eine Kupplungsdruckplatte 91 in Abtriebsrichtung abgespreizt ist, die gegen ein Lamellenpaket 92 der Anfahrkupplung 26 drückt. Deren Außenlamellen werden dabei von der Kupplungsglocke 37 drehfest gehalten. Die Kupplungsdruckplatte 91 ist dabei an ihrem Innenrand, entgegen der in ihrem äußeren Drittel eingreifenden Tellerfeder 90 durch mehrere Bolzen 93, die den auf der Sekundärwelle 34 drehfest und unverschieblich gehaltenen Innenlamellenträger 94 achsparallel durchdringen, axial belastbar. Abtriebsseitig vom Innenlamellenträger 94 werden sie dazu von einer Stellkolben-Druckplatte 95 beaufschlagt, welcher abtriebsseitig ein weiteres Axiallager 35 zugeordnet ist, gegen das sich beim Lüftvorgang der Stellkolben 96 der Anfahrkupplung 26 anpreßt.
Dieser ist in einem die Primärwelle 34 und einem diese umschließenden ringförmigen Stellkolben 96 umfassenden Stellzylinderringkörper 97 geführt, welcher in die zweite Gehäusezwischenwand 4 antriebsseitig vor dem Lager 82 der Antriebswelle 39 der Hauptgruppe 8 unverschieblich eingelassen ist.
In den Stellzylinderkörper 97 treten aus der zweiten Gehäusezwischenwand 4 sowohl die Kupplungsdruckleitung 98 zur Betätigung des Stellkolbens 96 als auch eine Kühlölleitung 99 ein. Letztere mündet in einen taschenförmigen Ringraum 100 radial unter dem Lamellenpaket 92. Von hier aus kann das Kühlöl auf an sich bekannte Weise mit durch Fliehkräfte erhöhtem Druck bei gleichmäßiger Verteilung durch nicht näher angegebene Radialbohrungen im Mantel des Innenlamellenträgers 94 in das Lamellenpaket 92 übertreten. Die Strömungsdauer und Intensität des Kühlöles kann dabei durch eine nicht besonders gezeigte Dosiereinrichtung mit dem Axialweg des Stellkolbens 96 bzw. der zugeordneten Druckplatte 95 so gekoppelt werden, daß die Kühlung nur beim Schließen der Kupplung 26 erfolgt. Um auch ohne Stellkraft ein Axialspiel dieser Betätigungsmechanik auszuschließen, ist der Stellkolben 96 noch durch eine in ihn eingelassene Spiralfeder 101 in Öffnungsrichtung etwa so weit belastet, daß die Schließkraft der Tellerfeder 90 noch nicht überwunden wird. Bei der Anfahrkupplung 26 wurde mit der vorgeschilderten Bauart eine Sonderausführung mit besonders geringer Masse gewählt, die ohne einen mitrotierenden Zylinder auskommt und eine entsprechend leichte Kupplungsglocke 37 zu verwenden erlaubt.
- Bei Erhöhung des Öldruckes im Stellzylinder 97 über die Schließkraft der Tellerfeder 90 hinaus wird die Anfahrkupplung 26 maximal so weit geöffnet, daß ein ausreichendes Lüftspiel zur Erreichung minimaler Schleppmomente entsteht. -

Die vom Stellzylinderkörper 97 samt Einbauten und Zubehör umgebene Sekundärwelle 34 ist abtriebsseitig davon und radial unter dem zugehörigen Lager 82 in ein antriebsseitiges hohles Ende der Antriebswelle 39 der Hauptgruppe 8 eingesteckt und gegen Verdrehung gesichert. Das daran anschließende Losrad 42 kämmt mit dem unter der Antriebswelle 39 vorgesehenen Festrad 48 auf der parallel dazu verlaufenden Abtriebswelle 52 der Hauptgruppe 8. Deren antriebsseitiges Ende ist in der zweiten Gehäusezwischenwand 4 mit einem Lager 82 gestützt, aus dem es mit einem freien Ende etwa so weit antriebsseitig hervorragt, wie der Stellzylinderkörper 97. Auf diesem freien Ende der Abtriebswelle 52 ist im Beispiel ein Antriebsfestrad 57 mittels Innenverzahnung und vorgeordneter Wellenmutter oder dergleichen befestigt. Dieses Festrad 57 treibt ein darunterliegendes Festrad 62, das auf einer Vorderachs-Antriebswelle 63 befestigt, abtriebsseitig einen Öffnungszylinder 102 für die Vorderachs-Zuschaltkupplung 64 besitzt und deren Innenlamellenträger er ist. Bei Druckerhöhung in diesem Zylinder können mehrere am Umfang verteilte axial geführte Kolben 103, die den Steg des Festrades 62 in Richtung Lamellenpaket 65 durchdringen, dieses in Kraftschluß bringen. Dadurch ist über die Kupplungsglocke der Vorderachs-Zuschaltkupplung 64 die Vorderachs-Antriebswelle 63 antreibbar, auf welcher im Beispiel noch die Bremse 66 angeordnet ist, deren Außenlamellen in einem mit der ersten Gehäusezwischenwand 3 verbundenen Bremsgehäuse 104 gehalten sind. Die Bremse 66 ist hierbei voll im Sumpf des Getriebegehäuses 1 geflutet und somit gut gekühlt. Im Beispiel ist die Verbindung des Bremsengehäuses 104 mit der ersten Gehäusezwischenwand 3 als nach oben offene schalenförmige Ausbuchtung 105 mit einem abtriebsseitig über die Zwischenwelle 30 hochreichenden zweiten Wandbereich 106 radial über der Bremse 66 ausgeführt. Damit entsteht eine zweite Abstützungsmöglichkeit für die speziell bei Einbau des Zwischengetriebes 9 erforderliche Zwischenwelle 30. Eine separate Öltasche radial unter dem Zwischengetriebe 9 sorgt dann für besonders gute Tauchschmierung desselben.

Die Zwischenwelle 30 kann wie alle Wellen 11, 12 usw. des Getriebes ebenfalls mit mindestens einem koaxialen Ölkanal 107 versehen sein, der mit Radialbohrungen unter Lagerstellen die Schmierung von Lagern 82 oder Losrädern etc. sicherstellt. Zur Verbindung dieses Ölkanals 107 in der Zwischenwelle 30 mit dem in der Abtriebswelle 52 der Hauptgruppe 8 ist in das antriebsseitige Ende der letzteren ein aus der Zwischenwelle 30 herausführendes Verbindungsrohr 108 eingesteckt.

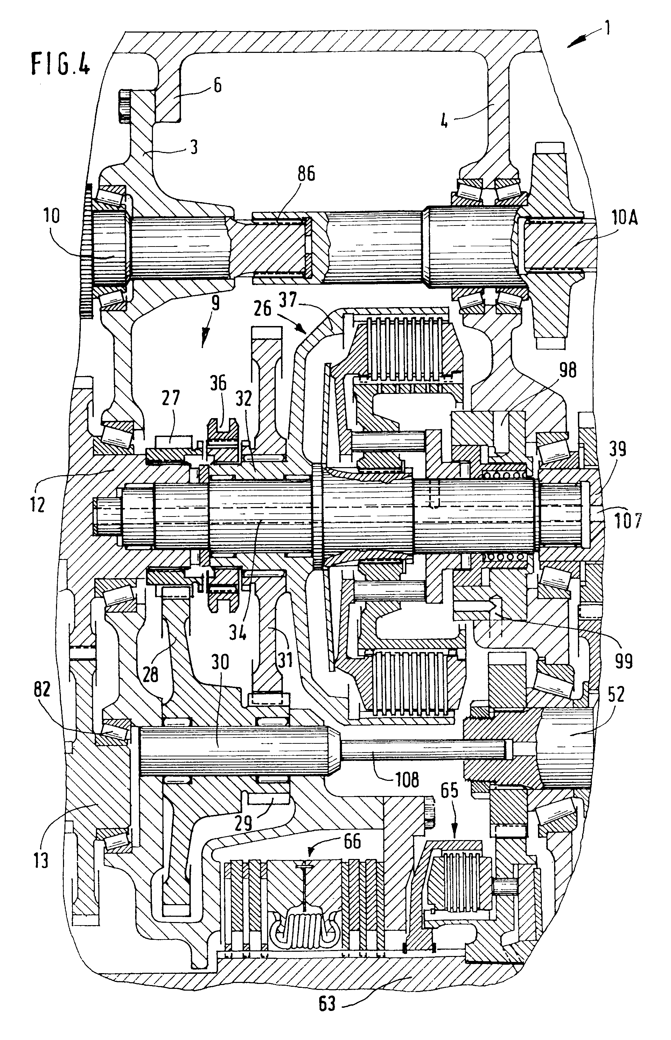

In Fig. 4 ist der gleiche Ausschnitt des Zahnradwechselgetriebes wie in Fig. 3 nochmals dargestellt, jedoch nun mit dem anstelle der Steckmuffenverbindung 87 eingebauten Zwischengetriebe 9. Dieses ist im vorliegenden Beispiel als Kriechganggetriebe gestaltet. Dazu ist das auf dem durch die erste Gehäusezwischenwand 3 hervorragenden Ende der erste Vorgelegewelle 12 gelagerte Festrad 27 mit kleinstmöglichem Durchmesser mit einer abtriebsseitigen Kupplungsverzahnung versehen, in welche eine Schiebemuffe 36 einschiebbar ist, die auf einem mit der als Nabe des Kupplungsglocke 37 gestalteten Primärwelle 32 durch einen Muffenträger drehfest ist.
Axial zwischen Muffenträger und Kupplungsglocke 37 ist ein großes Losrad 31 mit nur etwas kleinerem Durchmesser als dem der Kupplungsglocke 37 drehbar gelagert. Dieses Losrad 31 weist muffenträgerseitig die weitere entsprechende Kupplungsverzahnung für die Schiebemuffe 36 auf. Das vom Festrad 27 angetriebene Rad auf der Zwischenwelle 30 ist mit etwa gleich großem Durchmesser wie das Losrad 31 ausgeführt und durch seine Nabe als Doppelzahnrad 28, 29 mit einem kleinstmöglichen Abtriebsritzelrad einstückig, das wiederum mit dem Losrad 31 kämmt. Die gemeinsame Nabe ist dazu auf der Zwischenwelle 30 mit Nadellagern drehbar und seitlich fixiert durch die ersten Gehäusezwischenwand 3 einerseits und den hochgezogenen Rand des zweiten Wandbereiches 106 andererseits. Sobald die Schiebemuffe 36 in eine auf der Antriebsseite des Losrades 31 vorgesehene Kupplungsverzahnung einrastet, wird die Primärwelle 32 nicht mehr direkt mit der Drehzahl der Vorgelegewelle 12, sondern mit einer übersetzten oder untersetzten Drehzahl gemäß den Übersetzungen durch das Zwischengetriebe 9 angetrieben. Die Schiebemuffe 36 ist gleichzeitig aus der Kupplungsverzahnung des Festrades 27 ausgeklinkt. Damit wird das Losrad 31 des Zwischengetriebes 9 angekoppelt und die Antriebswelle 39 der Hauptgruppe 8 entsprechend langsamer angetrieben. Bleibt die Schiebemuffe 36 sowohl außer Eingriff mit der Kupplungsverzahnung des Festrades 27 als auch mit der Kupplungsverzahnung des Losrades 31, so ist die Hauptgruppe 8 völlig abgeschaltet und auch die Anfahrkupplung 26 antriebslos. Bleibt die Schiebemuffe 36 in der Kupplungsverzahnung des Festrades 27, so drehen zwar die Räder 28, 29, 31 frei mit, aber der Kraftschluß von Eingangsgruppe 7 zur Hauptgruppe 8 erfolgt direkt und nur über die Schiebemuffe 36 und deren Muffenträger ohne jede Über- oder Untersetzung. In Kriechgangsstellung ist die Schiebemuffe 36 in Abtriebsrichtung in die Kupplungsverzahnung des Losrades 31 geschoben und vom Festrad 27 frei, so daß die Triebverbindung über das Doppelzahnrad 28, 29 zur Kupplungsglocke 26 aktiviert ist.

Der zum Einbau eines Zwischengetriebes 9 benötigte axiale Abstand von der Primärwelle 32 entspricht dabei etwa der Baulänge eines einzigen Zahnrades 27, weil Schiebemuffe 36 und Losrad 31 von der ohnehin erforderlichen Nabe der Kupplungsglocke 37 getragen werden.

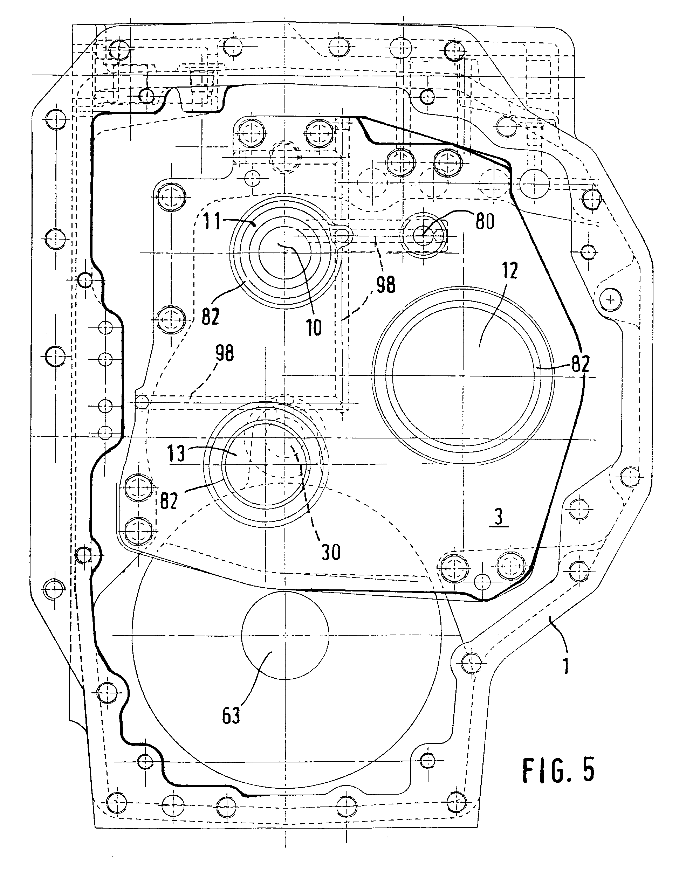

In Fig. 5 ist eine bevorzugte Kontur des Gehäuses 1 mit einem Querschnitt hinter dem Frontdeckel 2 dargestellt. Dabei ist die Eingangswelle 11 und die von ihr umschlossene Hauptantriebswelle 10 in der oberen Gehäusehälfte etwas links von der geometrischen Mitte innerhalb der Gehäusezwischenwand 3 vorgesehen, die auch Lager 82 der Wellen 12, 13 aufweist. Die Mittenabstände der Wellen 11, 12, 13 bilden ein gleichseitiges Dreieck, bei dem die Vorgelegewelle 12 in Blickrichtung rechts von der Vertikalen durch die Eingangswelle 11 für das an sich etwa rechteckige Format des Gehäuses 1 eine Ausladung nötig macht.
Die Umkehrwelle 13 liegt dabei nur unbedeutend links von der Vertikalen durch die Eingangswelle 11 und etwas tiefer als die Vorgelegewelle 12. Die Mitte der Vorderachs-Antriebswelle 63 befindet sich dabei genau senkrecht unter der Eingangswelle 11, jedoch unterhalb des unteren Randes der ersten Gehäusezwischenwand 3. So braucht z. B. bei Erneuerung von Synchronkupplungen in der Eingangsgruppe 7 weder die Vorderachs-Antriebswelle 63 noch die Hauptgruppe 8 oder die Anfahrkupplung 26 ausgebaut werden. Die in Fahrtrichtung links liegende Seite des Getriebegehäuses 1 bleibt mit dieser Anordnung frei für Anbauten wie Tanks etc., während die Gegenseite günstige seitliche Zugriffsmöglichkeiten z. B. zur Pumpe 81 oder den anderen Nebenabtrieben z. B. 74 ... 78 innerhalb des Gehäuses 1 bietet und keine größeren Getriebeteile solche Inspektionsarbeiten etc. behindern.

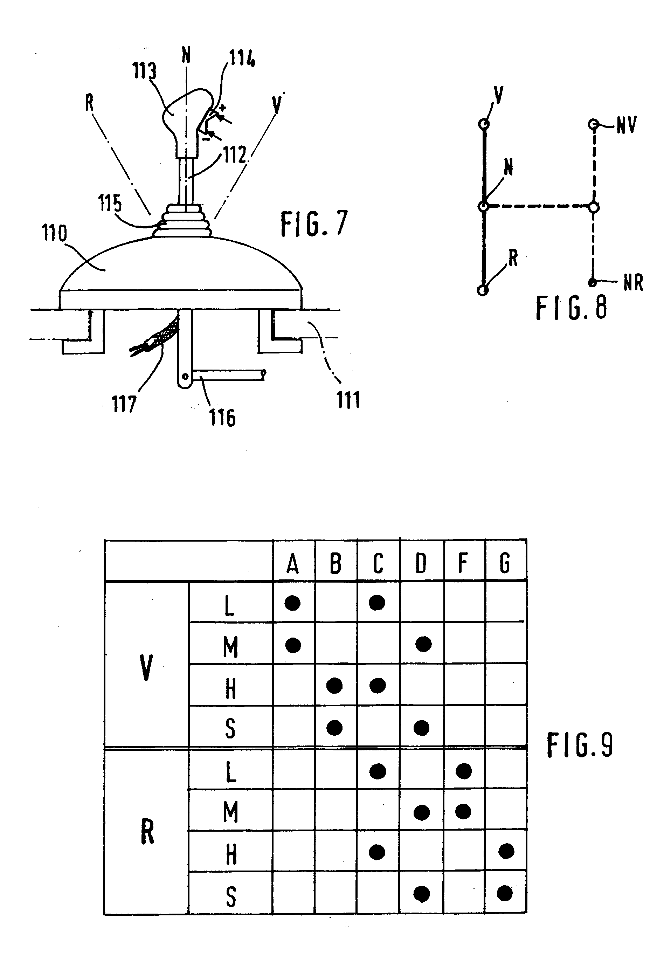

In Fig. 6 ist anhand der Abstandsverhältnisse in der Vertikalen V und der Horizontalen H der Wellen 10, 11, 12, 13, 52, 63 zueinander gezeigt, welche baulichen Maßnahmen getroffen wurden, um sowohl gleiche Geschwindigkeiten bei Vor- und Rückwärtsfahrten als auch günstige Übersetzungsverhältnisse und kompakten Bauraum zu erreichen. Am oberen Bildrand ist die Achse der Hauptantriebswelle 10 und der hohlwellenartigen Eingangswelle 11 strichpunktiert gezeichnet. Von dort wird der Vertikalabstand zur Vorgelegewelle mit V angenommen. Dann ist der Vertikalabstand von der Eingangswelle 11 zur Umkehrwelle 13 ca. V x 1,73 und zur Abtriebswelle 52 ca. V x 1,50 sowie zur Vorderachs-Antriebswelle 63 ca. V x 3,11.
Das Verhältnis der Horizontalabstände H von der Umkehrwelle 13 bis zur Eingangswelle 11 sowie bis zur Vorgelegewelle 12 beträgt ca. 1 : 9,9. Die Lage der Eingangs-, Vorgelege- und Umkehrwellen ist hierdurch und durch die Angabe von 60°-Winkeln für die Triebkraftverläufe für Vorwärts und Rückwärts R angegeben. Demnach bilden die Mittelpunkte dieser Wellen 10, 11, 12 und 13 ein gleichseitiges auf einer Spitze stehendes Dreieck. Die Positionen der Abtriebswelle 52 der Hauptgruppe 8 und der Vorderachs-Antriebswelle 63 sind hiervon an sich unbeeinflußt bzw. beliebig wählbar. Als vorteilhaft wurde jedoch für die letztere ein Abstand für die Vorderachse 63 von der Eingangswelle von ca. V x 3,11 ermittelt.

Die Fig. 7 und 8 zeigen einen zur Durchführung der Schaltoperationen beim Zahnräderwechselgetriebe nach Fig. 1 günstigen Einhand-Fahrschalter. Dieser verfügt über ein Gehäuse 110 für den Einbau in eine Konsole 111, welches einen Wendehebel 112 führt, in dessen Griff 113 ein MehrstufenWippschalter 114 eingelassen ist. Eine Rastierfeder 115 über oder unter dem Gehäuse 110 fixiert die gewählten Einstellungen. Am unteren Ende des Hebels 112 befinden sich die üblichen Anschlüsse für mechanische (Gestänge, Bowdenzüge etc.) und elektrische (Kabel) Betätigungen 116, 117.
Der Hebel 112 hat in der Senkrechten die Neutralstellung N und in ca. 20° nach vorne gekippt die Vorwärtsfahrstellung V sowie um ca. 20° nach hinten gekippt die Rückwärtsfahrstellung R. Der Wippschalter 114 hat eine Rückfederung in Mittelposition aus beiden Betätigungsrichtungen (+/-) und ist maximal ebenfalls ca. 20° in beiden Richtungen auslenkbar. Dabei erfolgt nach je ca. 7° eine Kontaktgabe mit ca. 2° Überhub.

In Fig. 8 ist das zugehörige Schaltbild dargestellt. Die bedarfsweise durch seitliches Einrücken erhältliche Position "Null" gilt für den Fall der Verwendung der mechanischen Not-Fahrschaltung über die Formschlußkupplung 25 beim Ausfall von Hydraulik oder/und Elektrizität bei einer mit hilfskraftbetätigten Kupplungen ausgerüsteten Eingangsgruppe.

In Fig. 9 ist in Tabellenform die Schaltfolge für die Eingangsgruppe 8 gezeigt. Die mit Punkten markierten Felder zeigen, welche Lastschaltkupplungen (A bis G) der Eingangsgruppe 7 jeweils durch den vorgeschilderten Wendehebel 112 bzw. den Wippschalter 114 zu aktivieren sind. Alle diese Gänge sind in jeder der beiden Fahrtrichtungen V und R in jedem der Gänge 1 bis 6 der Hauptgruppe 8 durch einen üblichen hier nicht gezeigten separaten mechanischen Ganghebel einlegbar.
Ein weiterer, nicht konstruktiv gezeigter Hebel bzw. Schalter ist für den Kriechgang CR vorgesehen, welcher bei Betätigung gleichzeitig den Hebel der Hauptgruppe 8 für die Gänge 5 und 6 sperrt. Die Stellungen des Wippschalters 114 L, M, H, S entsprechen den Begriffen für "LANGSAM", "MITTEL", "HOCH" und "SCHNELL". Da er in den mechanischen Hebel 112 eingelassen ist, kann der Fahrer trotz der großen Ganganzahl bei einzelnen Gangschaltungen ständig eine Hand am Lenkrad belassen. Bei der in Fig. 1 dargestellten Aufteilung können beispielsweise je 24 Vorwärts- und 24 Rückwärtsgänge mit Normalgeschwindigkeiten sowie bei Benutzung der Kriechgang- bzw. Schnellgang-Zwischenstufe nochmals jeweils 16 Vorwärts- und Rückwärtsgänge oder bei Benutzung der Schnellgang-Zwischenstufe 9 nochmals jeweils 24 Vorwärts- und Rückwärtsgänge gewählt werden. Bei dieser großen Zahl von Übersetzungsmöglichkeiten ist es möglich, mit sehr kleinen Gangsprüngen in der Eingangsgruppe 7 von in der Regel 1,2 eine sehr ruckarme und zugkräftige Fahrweise z. B. für Pflugbetrieb auf dem Acker als auch Schnellfahrbetrieb für die Straße zu erreichen, was einem Geschwindigkeitsbereich von ca. 0,3 km/h bis ca. 60 km/h entspricht.

## Patentansprüche

1. Vielstufiges Zahnräderwechselgetriebe, das von einem Gehäuse (1) mit einem Gehäusedeckel (2), Gehäusezwischenwänden (3, 4) und einer Gehäuserückseite (5) umschlossen ist,
- mit einer Anfahrkupplung (26) und mehreren Getriebegruppen (7, 8) in Vorgelegebauweise,
- von denen eine grobstufige Hauptgruppe (8) mit Synchronschaltkupplungen als Bereichsgruppe zur Wahl des gewünschten Drehzahlbereiches
- und eine dieser vorgeschaltete, feinstufige Eingangsgruppe (7) als Splitgruppe zur Feinabstimmung der Drehzahlen innerhalb eines Drehzahlbereiches dienen,
- wobei eine erste Vorgelegewelle (12) der Eingangsgruppe (7) axial fluchtend zu einer Antriebswelle (39) der Hauptgruppe (8) liegt
- und wobei eine Hauptantriebs- und eine Eingangswelle (10, 11) gegenüber der ersten Vorgelegewelle (12) parallel versetzt angeordnet ist
- sowie mit einer Zapfwelle (73) trieblich koppelbar ist,
dadurch **gekennzeichnet,**
- daß die Hauptantriebswelle (10) an der Hauptgruppe (8) vorbeigeführt und die Zapfwelle (73) im Bereich der Gehäuserückseite (5) vorgesehen ist,
- daß die Anfahrkupplung (26) räumlich und trieblich zwischen der ersten Vorgelegewelle (12) und der Antriebswelle (39) angeordnet ist
- und daß die Anfahrkupplung (26) ein zwangsölgekühltes Lamellenpaket (92) aufweist, bei dem der Öldurchfluß bei geöffneter Anfahrkupplung abschaltbar ist.

2. Getriebe nach Anspruch 1, dadurch **gekennzeichnet,**
- daß in der Eingangsgruppe (7) eine Umkehrwelle (13) parallel zur ersten Vorgelegewelle (12) vorgesehen ist,
- welche mit mindestens einem Festrad (23 bzw. 23A) sowie einem weiteren Losrad (21) oder Festrad (21A) ausgerüstet ist,
- von denen das Festrad (23 bzw. 23A) sich in ständiger trieblicher Verbindung zur Hauptantriebs- bzw. Eingangswelle (10, 11) befindet
- und das weitere Zahnrad (21 bzw. 21A) durch eine innerhalb der Eingangsgruppe (7) angeordnete Lastschaltkupplung (F) bzw. Synchronkupplung (20C) mit einer Primärwelle (32) der Anfahrkupplung (26) in Triebverbindung bringbar ist.

3. Getriebe nach Anspruch 1, dadurch **gekennzeichnet,** daß auf jeder Welle (10, 11; 12; 13) der Eingangsgruppe (7) je eine Kupplungsglocke (14, 15, 16) von Lastschaltkupplungen (A, C; B, D; F, G) gelagert ist, die vertikal miteinander fluchten.

4. Getriebe nach Anspruch 2, dadurch **gekennzeichnet,**
- daß die Synchronkupplungen (18C, 20C) bzw. Lastschaltkupplungen (B, C) der Eingangsgruppe (7) durch einen gemeinsamen Gangwähler (83A) betätigbar sind,
- welche samt ihren zugehörigen Losrädern (18A, 18B und 20A, 20B) auf der ersten Vorgelegewelle (12) nebeneinander liegen und mit jeweils zwei Eingriffsstellungen versehen sind,
- von denen mindestens bei einer Eingriffsstellung im einen Losrad (20B) die Umkehrwelle (13) in die Triebverbindung zur Primärwelle (32) der Anfahrkupplung (26) als Rückwärtsgang einbeziehbar ist.

5. Getriebe nach einem der vorhergehenden Ansprüche 1 bis 4, dadurch **gekennzeichnet,** daß allen in der Eingangsgruppe (7) liegenden Lastschalt- und Synchronkupplungen (A ... G bzw. 18C, 20C), welche über einen gemeinsamen Gangwähler (83 bzw. 83A) hilfskraftbetätigbar sind, ein rein mechanisch betreibbarer Not-Fahrantrieb (24, 25) für Vor- und Rückwärtsfahrt zugeordnet ist.

6. Getriebe nach Anspruch 5, dadurch **gekennzeichnet,**
- daß der Not-Fahrantrieb (24, 25) aus einer auf der Hauptantriebs-bzw. Eingangswelle (10, 11) angeordneten und unabhängig vom Gangwähler (83 bzw. 83A) manuell betätigbaren Formschlußkupplung (25) besteht,
- durch welche, je nach Fahrtrichtung, entweder ein antriebsseitiges Losrad (19) auf der Hauptantriebs- bzw. Eingangswelle (10, 11) mit einem Festrad (20) auf der ersten Vorgelegewelle (12) bzw. Primärwelle (32) der Anfahrkupplung (26) oder ein abtriebsseitiges Losrad (24), das mit der Primärwelle (32) trieblich verbunden ist, mit einer von einem auf der Welle (10, 11) drehfesten Muffenträger mitgenommenen Schiebemuffe der Formschlußkupplung (25) in Eingriff bringbar ist.

7. Getriebe nach Anspruch 1, dadurch **gekennzeichnet,** daß die Eingangswelle (11) als eine über eine Einrichtung (11A) zur Schwingungsdämpfung von der Hauptantriebswelle (10) mitgenommene und zu dieser konzentrische Hohlwelle parallel über der ersten Vorgelegewelle (12) gestaltet ist.

8. Getriebe nach Anspruch 1, dadurch **gekennzeichnet,**
- daß die Synchronkupplungen (40, 41, 53) in der Hauptgruppe (8) als Doppelkupplungen mit je einem auf ihrer Welle (39 bzw. 52) drehfesten Muffenträger zwischen je zwei mit Kupplungsverzahnungen versehenen unterschiedlich großen Losrädern (42, 43; 44, 45; 54, 55) gestaltet sind,
- die ihrerseits ständig in Eingriff stehen zu den auf der jeweils parallelen Welle (39 bzw. 52) drehfesten, unterschiedlich großen Gegenrädern (Festrädern 48, 49; 50, 51; 46, 47).

9. Getriebe nach Anspruch 1, dadurch **gekennzeichnet,** daß in der Eingangsgruppe (7) die Hauptantriebs- bzw. Eingangswelle (10, 11), die erste Vorgelegewelle (12) und die Umkehrwelle (13) in einer Dreiecksanordnung mit gleichen Seitenlängen (R) eingebaut sind.

10. Getriebe nach Anspruch 3, dadurch **gekennzeichnet,**
- daß für jede Kupplungsglocke (14, 15, 16) in der Eingangsgruppe (7) je eine identische Doppelkupplung (C, A; D, B; G, F) pro Welle (11, 12, 13) vorgesehen ist,
- wobei eine Außenverzahnung der Kupplungsglocke (14) sowohl mit einer Außenverzahnung der Kupplungsglocke (15) als auch mit einer Außenverzahnung der Kupplungsglocke (16) ständig in Eingriff stehen,
- während die Außenverzahnung der Kupplungsglocke (16) axial so verkürzt ist, daß sie gegenüber der Kupplungsglocke (15) außer Eingriff bleibt.

11. Getriebe nach Anspruch 3, dadurch **gekennzeichnet,**
- daß der auf der Hauptantriebs- und Eingangswelle (10, 11) angeordneten Lastschaltkupplung (C, A) jeweils ein Zahnrad (17, 19) auf jeder Seite in verschiedener Größe außen vorgeordnet ist, welche mit je einem der Innenlamellenträger der Lastschaltkupplung (C, A) drehfest sind, wobei das Zahnrad (17) ein Festrad der Eingangswelle und das Zahnrad (19) ein Losrad der Hauptantriebswelle (10) ist,
- daß der auf der ersten Vorgelegewelle (12) angeordneten Lastschaltkupplung (D, B) auf ihrer eingangsseitigen Seite ein Losrad (18) vorgeordnet und auf ihrer ausgangsseitigen Seite nachgeordnet zwei koaxial angeordnete Festräder (20, 22) verschiedener Größe abtriebsseitig angeordnet sind,
- von denen das eingangsseitige Losrad (18) und das kupplungsnähere, ausgangsseitige Festrad (20) jeweils mit einem Innenlamellenträger der Lastschaltkupplung (D, B) drehfest ist,
- daß der auf der Umkehrwelle (13) angeordneten Lastschaltkupplung (G, F) nur auf ihrer ausgangsseitigen Seite ein Losrad (21) und ein Festrad (23) verschiedener Größe außen vorgeordnet sind, von denen das kupplungsnähere (21) mit einem ersten Innenlamellenträger der Lastschaltkupplung (F) über eine kurze Hohlwelle und das kupplungsfernere (23) über die die Hohlwelle durchdringende Umkehrwelle (13) mit einem weiteren Innenlamellenträger der Lastschaltkupplung (G) drehfest verbunden sind
- und daß das Festrad (17) der Eingangswelle (11) und das Losrad (19) der Hauptantriebswelle (10) in Eingriff stehen einerseits mit dein eingangsseitigen Losrad (18) und andererseits mit dem ausgangsseitigen, kupplungsnäheren Festrad (20) auf der ersten Vorgelegewelle (12) und
- daß das Losrad (21) und das Festrad (23) auf der Umkehrwelle (13) auch in Eingriff stehen mit beiden Festrädern (20, 22) auf der ersten Vorgelegewelle (12).

12. Getriebe nach Anspruch 1, dadurch **gekennzeichnet,**
- daß axial zwischen der ersten Gehäusezwischenwand (3) abtriebsseitig von der Eingangsgruppe (7) und vor der Anfahrkupplung (26) ein Freiraum (9A) zum bedarfsweisen Einbau eines Zwischengetriebes (9) vorgesehen ist,
- daß das Zwischengetriebe (9) ein Kriechganggetriebe mit einem eingangsseitigen Festrad (27) etwa mit dem Durchmesser einer Nabe der Anfahrkupplung (26) ist
- und daß die mit diesem Festrad (27) kämmende eingangsseitige Hälfte eines auf einer Zwischenwelle (30) umlaufenden Doppelzahnrades (28, 29) mindestens 1,6mal so groß wie das Festrad (27) ist.

13. Getriebe nach Anspruch 12, dadurch **gekennzeichnet,**
- daß eine Schaltkupplung des Zwischengetriebes (9) eine Synchronschaltkupplung mit beidseitigen Reibflächen und Kupplungsverzahnungen ist
- und daß deren Schiebemuffe (36) bei eingangsseitiger Endstellung einen übersetzungsfreien direkten Kraftfluß und bei ausgangsseitiger Endstellung einen über- bzw. untersetzten indirekten Kraftfluß von der Vorgelegewelle (12) zur Primärwelle (32) der Anfahrkupplung (26) bzw. zur Antriebswelle (39) der Hauptgruppe (8) überträgt.

14. Getriebe nach Anspruch 12, dadurch **gekennzeichnet,**
- daß die erste Gehäusezwischenwand (3) in ihrem unteren Bereich eine oben offene, schalenförmige Ausbuchtung (105) mit einem abtriebsseitig hochgezogenen zweiten Wandbereich (106) aufweist
- und daß von der schalenförmigen Ausbuchtung (105) das Doppelzahnrad (28, 29) des Zwischengetriebes (9) auf der Zwischenwelle (30) unten umhüllt ist,
- wobei die Zwischenwelle (30) sowohl in der ersten Gehäusezwischenwand (3) als auch im angeformten zweiten Wandbereich (106) der schalenförmigen Ausbuchung (105) abgestützt ist.

15. Getriebe nach Anspruch 12, dadurch **gekennzeichnet,**
- daß die Antriebswelle (39) der Hauptgruppe (8) den Freiraum (9A) zum Einbau des Zwischengetriebes (9) von der zweiten bis zur ersten Gehäusezwischenwand (4, 3) einstückig überbrückt
- und daß die darauf lose gelagerte und sowohl als Außenlamellenträger der Kupplungsglocke (37) als auch als Primärwelle (32) dienende durch je ein Axiallager (33, 35) zwischen ihren Stirnseiten und einem abtriebsseitigen Radialstützbund (89) der Sekundärwelle (34) sowie einer antriebsseitigen Frontseite der sie umhüllenden Nabe des ausgangsseitigen Festrades (22) der ersten Vorgelegewelle (12) axial geführt ist.

16. Getriebe nach Anspruch 8, dadurch **gekennzeichnet,**
- daß die Hauptgruppe (8) mit den durch zwei Schiebemuffen betätigbaren Synchronkupplungen (40, 41) samt zugehörigen Losrädern (42, 43 und 44, 45) auf der Antriebswelle (39) und der baugleichen dritten Synchronkupplung (53) auf der Ausgangswelle (52) versehen ist,
- wobei die Losräder (42, 43 und 44, 45) der Antriebswelle (39) mit Festrädern (48, 49 und 50, 51) auf der Ausgangswelle (52) und die Losräder (54, 55) der Ausgangswelle (52) mit Festrädern (46, 47) auf der Antriebswelle (39) antreibbar sind.

17. Getriebe nach Anspruch 1, dadurch **gekennzeichnet,**
- daß auf einer Sekundärwelle (34) der Anfahrkupplung (26), die drehfest mit der Antriebswelle (39) der Hauptgruppe (8) verbunden ist, ein Radialsteg mit darauf gehaltertem und abtriebsseitig abstehendem Innenlamellenträger (94) mit Radialbohrungen (94A) zum Lamellenpaket (92) vorgesehen ist
- und daß in eine axial vom Radialsteg begrenzte und hauptgruppenseitig offene Ringtasche (100) innerhalb des Innenlamellenträgers (94) ein in der zweiten Gehäusezwischenwand (4) befindlicher Ölkanal (99) horizontal einmündet,
- welcher im Zusammenhang mit Schließvorgängen der Anfahrkupplung (26) zur Zwangskühlung gespeist wird durch eine mit der Betätigung der Anfahrkupplung (26) gekoppelte Schmierölzufuhr.

18. Getriebe nach Anspruch 1, dadurch **gekennzeichnet,**
- daß die Abtriebswelle (52) der Hauptgruppe (8) auf einem aus ihrem Lager (82) in der zweiten Gehäusezwischenwand (4) eingangsseitig herausragenden Ende ein durch eine Achsmutter gesichertes Festrad (57) aufweist,
- welches in Eingriff steht mit einem Losrad (62) einer Vorderachs-Zuschaltkupplung auf einer Vorderachs-Antriebswelle (63), die sowohl in der zweiten (4) als der ersten (3) Gehäusezwischenwand Lager (82) hat,
- wobei im Steg des Losrades (62) ein Hydraulikzylinder (102) mit Kolben zur Öffnung des Lamellenpaketes gegen eine entgegenstehende Tellerfeder eingelassen ist und die Außenlamellen einer als Lamellenträger dienenden Kupplungsglocke (64) über deren Nabe auf der Vorderachs-Antriebswelle (63) gehaltert sind.

19. Getriebe nach Anspruch 18, dadurch **gekennzeichnet,**
- daß der Vorderachs-Zuschaltkupplung eine Bremse (66) mit Doppel-Spreizkolben zwischen zwei Lamellenpaketen trieblich nachgeordnet ist,
- deren Innenlamellen auf der Vorderachs-Antriebswelle (63) drehfest und deren Außenlamellen über ein in der ersten Gehäusezwischenwand (3) gehaltertes Bremsgehäuse (104) drehfest sind.

20. Getriebe nach Anspruch 1, dadurch **gekennzeichnet,** daß von der Hauptantriebs bzw. Eingangswelle (10, 11) abtriebsseitig von der Eingangsgruppe (7) ein Festrad (79) angetrieben wird, welches mit einem zu einem parallelen Pumpenantrieb (81) gehörenden Zahnrad (80) in Eingriff steht.

21. Getriebe nach Anspruch 1, dadurch **gekennzeichnet,** daß in dem der Eingangswelle (11) abtriebsseitig nachgeordneten Bereich eine Zuschaltkupplung (67) mit nachgeordneter Doppelschaltkupplung (68) für alternative Triebverbindungen über zumindestens zwei verschieden große Zapfwellen-Abtriebsräder (71, 72) einer Zapfwelle (73) vorgesehen ist.

22. Getriebe nach Anspruch 1, dadurch **gekennzeichnet,** daß der Ölspiegel im Getriebegehäuse (1) niedriger als die Achsmitte der Ausgangswelle (52) der Hauptgruppe (8) vorgesehen ist.

23. Getriebe nach Anspruch 1, dadurch **gekennzeichnet,**
- daß die Wellen aller Getriebegruppen mit zu Schmierstellen bzw. zu den Stellzylindern der Lastschaltkupplungen (A, B, C, D, F, G) führenden Ölkanalbohrungen (107) versehen sind,
- denen Zutrittsanschlüsse über Ringnuten in den Gehäusezwischenwänden (2, 3, 4) und Radialbohrungen aus den Wellen zugeordnet sind.

24. Getriebe nach Anspruch 1, dadurch **gekennzeichnet,**
- daß die Lastschaltkupplungen (C, A) auf der Hauptantriebs- bzw. Eingangswelle (10, 11) durch von einem Ölzufuhr-Ringbund beim zapfwellenseitigen Lager (82) in der ersten Gehäusezwischenwand (3) ausgehende Ölkanalbohrungen (107) ansteuerbar sind
- und daß die Lastschaltkupplungen (D, B und G, F) auf der ersten Vorgelegewelle (12) sowie auf der Umkehrwelle (13) der Eingangsgruppe (7) durch von Ölzufuhr-Ringbunden in den Lagern (82) im frontseitigen Gehäusedeckel (2) ausgehende Ölkanalbohrungen (107) ansteuerbar sind und
- daß die Anfahrkupplung (26) vor der Antriebswelle (39) der Hauptgruppe (8) durch einen in der zweiten Gehäusezwischenwand (4) angeordneten Druckölkanal (98) hydraulisch betätigbar ist.

25. Getriebe nach Anspruch 1, dadurch **gekennzeichnet,** daß die erste Gehäusezwischenwand (3) durch eine Gehäuseöffnung paßt und unabhängig von den Lagern (82) der Wellen (39 und 52) der Hauptgruppe (8) gegen einen Gehäuseflansch (6) im Inneren des Gehäuses (1) antriebsseitig angeschraubt ist.

## Claims

1. Gear change box with multiple steps enclosed within a housing (1) having a housing cover (2), partition walls (3, 4) and a rear housing wall (5),
- incorporating a starting clutch (26) and several gear groups (7, 8) in a layshaft configuration,
- including a wide-stepped main group (8) with a synchronized separating clutch as a range-change group for selection of the desired speed range
- and a front-mounted close-stepped input group (7) as a splitter group for fine adjustment of speeds within a single speed range,
- whereby a first layshaft (12) of the input group (7) is axially aligned with an input shaft (39) of the main group (8), and
- whereby a main drive shaft and an input shaft (10, 11) are offset in parallel to the first layshaft (12),
- and can also be linked to a PTO shaft (73) in a driving connection,
**characterized** in that,
- the main drive shaft (10) bypasses the main group (8), and the PTO shaft (73) is located near to the rear housing wall (5),
- the starting clutch (26) is spatially located between, and forms a driving connection between, the first layshaft (12) and the input shaft (39), and
- the starting clutch (26) has a disc pack (92) which is cooled by pressure lubrication, whereby the oil flow can be cut-off when the starting clutch is opened.

2. Gearbox in accordance with claim 1, **characterized** in that,
- the input group (7) includes a change-over shaft (13) which runs parallel to the first layshaft (12),
- the said layshaft incorporates at least one fixed gear (23 or 23A) and a further idler gear (21) or fixed gear (21A),
- whereby the fixed gear (23 or 23A) forms a constant driving connection with the main drive shaft or input shaft (10, 11), and
- the other gear (21 or 21A) can be moved into a driving connection with a primary shaft (32) of the starting clutch (26) by means of a powershift clutch (F) or synchronized clutch (20C) located within the input group (7).

3. Gearbox in accordance with claim 1, **characterized** in that, a clutch bell (14, 15, 16) consisting of powershift clutches (A, C; B, D; F, G) is located on every shaft (10, 11; 12; 13) of the input group (7), these clutch bells being vertically aligned with one another.

4. Gearbox in accordance with claim 2, **characterized** in that,
- the synchronized clutches (18C, 20C) or powershift clutches (B, C) of the input group (7) can be actuated using a common gear selector (83A),
- and are located, together with their respective idler gears (18A, 18B and 20A, 20B), side-by-side on the first layshaft (12), each including two meshing positions,
- whereby in at least one meshing position of the layshaft (12) in an idler gear (20B), the change-over shaft (13) can be included in the driving connection with the primary shaft (32) of the starting clutch (26) as a reverse gear.

5. Gearbox in accordance with one of the previous claims 1 to 4, **characterized** in that, all powershift and synchronized clutches (A...G or 18C, 20C) in the input group (7) which can be actuated with the help of power assistance using the shared gear selector (83 or 83A), are allocated an emergency drive (24, 25) for forwards and reverse operation which is purely mechanically operated.

6. Gearbox in accordance with claim 5, **characterized** in that,
- the emergency drive (24, 25) comprises a manually actuated positively engaged clutch (25) which is located on the main drive shaft or input shaft (10, 11) and is independent of the gear selector (83 or 83A),
- whereby depending on the direction of travel, the said clutch is used either to move an idler gear (19) mounted on the input end of the main drive shaft or input shaft (10, 11) into mesh with a fixed gear (20) on the first layshaft (12) or primary shaft (32) of the starting clutch (26), or is used to move an idler gear (24) mounted on the output end, which forms a driving connection with a primary shaft (32), into mesh with a sliding sleeve driven off a sleeve carrier fixed on the shaft (10, 11), whereby the sliding sleeve is part of the positively engaged clutch (25).

7. Gearbox in accordance with claim 1, **characterized** in that, the input shaft (11) is designed as a quill shaft driven off the main drive shaft (10) through a device (11A) for damping vibration and is located concentrically to the main drive shaft in parallel to, and above, the first layshaft (12).

8. Gearbox in accordance with claim 1, **characterized** in that,
- the synchronized clutches (40, 41, 53) in the main group (8) are designed as double clutches, each with a fixed sleeve carrier mounted on the shaft (39 or 52) located between two idler gears of different sizes (42, 43; 44, 45; 54, 55) with dog teeth,
- the said idler gears being in constant mesh with the meshing gears of different sizes (fixed gears 48, 49; 50, 51; 46, 47) fixed on the corresponding parallel shaft (39 or 52).

9. Gearbox in accordance with claim 1, **characterized** in that, the main drive shaft and input shaft (10, 11), the first layshaft (12) and the change-over shaft (13) are arranged in a triangular configuration in the input group (7), all sides having an equal length (R).

10. Gearbox in accordance with claim 3, **characterized** in that,
- one double clutch (C, A; D, B; G, F) per shaft (11, 12, 13) is provided for, and is identical to, each clutch bell (14, 15, 16) in the input group (7),
- whereby an external gear profile of the clutch bell (14) is in constant mesh with an external gear profile of the clutch bell (15) and also with an external gear profile of the clutch bell (16),
- whereas the axial length of the external gear profile of the clutch bell (16) is shortened to such a degree that it does not come into mesh with the clutch bell (15).

11. Gearbox in accordance with claim 3, **characterized** in that,
- one differently sized gear (17, 19) on each side is installed externally in front of the powershift clutch (C, A) on the main drive shaft and input shaft, whereby each of the said gears (17, 19) are fixed to one of the internal disc carriers of the powershift clutch (C, A) and whereby the gear (17) is a fixed gear on the input shaft and the gear (19) is an idler gear on the main drive shaft (10),
- an idler gear (18) is located on the input side in front of the powershift clutch (D, B) on the first layshaft (12), and two coaxially arranged fixed gears (20, 22) of different sizes are located on the output end after the powershift clutch (D, B),
- whereby the input end idler gear (18) and the output end fixed gear (20) which is nearer the clutch are both fixed by an internal disc carrier of the powershift clutch (D, B),
- only an idler gear (21) and a fixed gear (23) of different sizes are located externally in front of the powershift clutch (G, F) on the change-over shaft (13), whereby the gear nearest the clutch (21) is connected to a first internal disc carrier of the powershift clutch (F) via a short quill shaft and the gear (23) farther from the clutch is fixed onto another internal disc carrier of the powershift clutch (G) via the change-over shaft (13) which passes through the quill shaft,
- the fixed gear (17) on the input shaft (11) and the idler gear (19) on the main drive shaft (10) are in mesh, on the one hand, with the input end idler gear (18), and on the other hand, with the output end fixed gear (20) nearer the clutch on the first layshaft (12), and
- the idler gear (21) and the fixed gear (23) on the change-over shaft (13) are also in mesh with both fixed gears (20, 22) on the first layshaft (12).

12. Gearbox in accordance with claim 1, **characterized** in that,
- there is axial space (9A) available for installation of an intermediate gear unit (9) between the first inner housing wall (3) on the output end of the input group (7) and in front of the starting clutch (26), if required,
- the intermediate gear unit (9) is a crawler gearbox with a fixed gear (27) on the input end which has approximately the same diameter as a hub on the starting clutch (26), and
- the half of a double gear (28, 29) on the output end which turns on an intermediate shaft (30) and which is in mesh with this fixed gear (27) is at least 1.6 times larger than the fixed gear (27).

13. Gearbox in accordance with claim 12, **characterized** in that,
- one separating clutch on the intermediate gearbox (9) is a synchronized separating clutch with double-sided friction surfaces and dog teeth,
- when the sliding sleeve (36) is at its limit position on the input end, power is transferred directly, and when the sliding sleeve is at its limit position on the output end, an indirect power-flow with a reduced or increased ratio is established from the layshaft (12) to the primary shaft (32) of the starting clutch (26) or to the input shaft (39) of the main group (8).

14. Gearbox in accordance with claim 12, **characterized** in that,
- the first housing partition wall (3) has an open hollow cavity (105) in the lower area which has a raised second wall area (106) on the output end, and
- the lower end of the double gear (28, 29) of the intermediate gearbox (9) on the intermediate shaft (30) is enclosed within the hollow cavity (105),
- whereby the intermediate shaft (30) is supported both by the first housing partition wall (3) and the second wall area (106) formed by the hollow cavity (105).

15. Gearbox in accordance with claim 12, **characterized** in that,
- the input shaft (39) of the main group (8) crosses the free space (9A) available for installation of the intermediate gearbox (9) between the second and first inner housing walls (4, 3) in one section, and
- the shaft which is loosely mounted thereupon which serves both as an outer disc carrier for the clutch bell (37) as well as the primary shaft (32) is axially mounted on axial bearings (33, 35) between the ends of the shaft and a radial mounting collar (89) on the output end of the secondary shaft (34), and that in addition, axial mounting is provided by a front end of the hub which encloses it on the input end, whereby the hub is part of the output end fixed gear (22) of the first layshaft (12).

16. Gearbox in accordance with claim 8, **characterized** in that,
- the main group (8) includes the synchronized clutches (40, 41) actuated by two sliding sleeves together with the respective idler gears (42, 43 and 44, 45) on the input shaft (39) as well as the third synchronized clutch (53), of similar design, on the output shaft (52),
- whereby the idler gears (42, 43 and 44, 45) on the input shaft (39) can be driven by fixed gears (48, 49 and 50, 51) on the output shaft (52), and the idler gears (54, 55) on the output shaft (52) can be driven by fixed gears (46, 47) on the input shaft (39).

17. Gearbox in accordance with claim 1, **characterized** in that,
- a secondary shaft (34) of the starting clutch (26) is fixed to the input shaft (39) of the main group (8) and has a radial web holding an output end inner disc carrier (94), the said disc carrier having radial bores (94A) in relation to the disc pack (92), and
- the inner disc carrier (94) contains a circular pocket (100) which is axially enclosed by the radial web and is open on the main group end, into which an oil duct (99) located in the second housing partition wall (4) emerges horizontally,
- the said oil duct being supplied with lubricating oil from a lube oil supply when the starting clutch (26) is actuated for forced cooling purposes.

18. Gearbox in accordance with claim 1, **characterized** in that,
- a fixed gear (57) secured by an axial nut is located on the end of the output shaft (52) of the main group (8) which protrudes towards the input end out of its bearing (82) in the second housing partition wall (4),
- the said fixed gear is in mesh with an idler gear (62) from a front axle engageable clutch on a front axle input shaft (63), which has bearings (82) in both the second (4) and first (3) housing partition walls,
- whereby a hydraulic cylinder (102) containing pistons for opening the disc pack is inserted opposite to a plate spring in the idler gear (62) web, and the outer discs of a clutch bell (64) acting as a disc carrier are located above the hub of the said clutch bell (64) on the front axle input shaft (63).

19. Gearbox in accordance with claim 18, **characterized** in that,
- a brake (66) with double thrust pistons forming a driving connection with the front axle engageable clutch is located between two disc packs on the output end of the front axle engageable clutch,
- the inner discs of the said disc pack are fixed to the front axle input shaft (63) and the outer discs of the said disc pack are fixed by a brake housing (104) which is located in the first inner housing wall (3).

20. Gearbox in accordance with claim 1, **characterized** in that, a fixed gear (79) is driven by the main drive shaft or input shaft (10, 11) on the output end of the input group (7), the said fixed gear (79) being in mesh with a gear (80) belonging to a parallel pump drive (81).

21. Gearbox in accordance with claim 1, **characterized** in that, an engageable clutch (67) followed by a double separating clutch (68) for alternative driving connections via at least two different sized PTO shaft output gears (71, 72) on a PTO shaft (73) is located in the area of the output end of the input shaft (11).

22. Gearbox in accordance with claim 1, **characterized** in that, the oil level in the gearbox housing (1) is lower than the centre line of the output shaft (52) of the main group (8).

23. Gearbox in accordance with claim 1, **characterized** in that,
- the shafts of all groups incorporate oil duct bores (107) which lead to lubrication points or the adjusting cylinders on the powershift clutches (A, B, C, D, E, F, G),
- ring grooves in the inner housing walls (2, 3, 4) and radial bores coming from the shafts act as infeed channels for the said oil duct bores.

24. Gearbox in accordance with claim 1, **characterized** in that,
- the powershift clutches (C, A) on the main drive shaft and input shaft (10, 11) are controlled through oil duct bores (107) from an oil flow ring collar on the PTO shaft end bearing (82) in the first housing partition wall (3), and
- the powershift clutches (D, B and G, F) on the first layshaft (12) and on the change-over shaft (13) of the input group (7) are controlled through oil duct bores (107) from oil flow ring collars in the bearings (82) in the front side of the housing cover (2), and
- the starting clutch (26) in front of the input shaft (39) of the main group (8) is hydraulically actuated through a pressure oil duct (98) located in the second housing partition wall (4).

25. Gearbox in accordance with claim 1, **characterized** in that, the first inner housing wall (3) passes through a housing opening and is screwed onto a housing flange (6) on the inside of the housing (1) on the input side, independently of the bearings (82) on the shafts (39 and 52) of the main group (8).

## Revendications

1. Boîte à vitesses multiples à engrenages, contenue par un carter (1) pourvu d'un couvercle (2), de cloisons intermédiaires (3, 4) et d'un côté arrière (5),
- avec un embrayage de démarrage (26) et plusieurs groupesrelais (7, 8) du type à renvoi,
- dont un groupe principal (8) à étagement large et à embrayages synchronisés sert de groupe de changement de gammes pour choisir la gamme de régimes voulue
- et un groupe d'entrée (7) à étagement serré, disposé en amont du groupe principal, sert de groupe de subdivision pour la sélection fine des régimes à l'intérieur d'une gamme de régimes,
- où un premier arbre de renvoi (12) du groupe d'entrée (7) est aligné axialement avec un arbre entraîneur (39) du groupe principal (8)
- et où un arbre entraîneur principal et un arbre d'entrée (10, 11) sont décalés et parallèles par rapport au premier arbre de renvoi (12)
- et peuvent être accouplés à un arbre de prise de mouvement (73) pour l'entraîner,
**caractérisée :**
- en ce que l'arbre entraîneur principal (10) passe le long du groupe principal (8), l'arbre de prise de mouvement (73) étant prévu dans la zone du côté arrière (5) du carter,
- en ce que l'embrayage de démarrage (26) est disposé, dans l'espace et dans la chaîne cinématique, entre le premier arbre de renvoi (12) et l'arbre entraîneur (39),
- et en ce que l'embrayage de démarrage (26) comporte un paquet de disques (92) à refroidissement forcé à huile, où le flux d'huile peut être arrêté lorsque l'embrayage de démarrage est ouvert.

2. Boîte selon la revendication 1, **caractérisée :**
- en ce qu'il est prévu dans le groupe d'entrée (7), parallèlement au premier arbre de renvoi (12), un arbre d'inversion (13)
- qui est équipé d'au moins un pignon fixe (23, 23A) et d'un autre pignon fou (21) ou fixe (21A),
- dont le pignon fixe (23, 23A) est en liaison motrice permanente avec l'arbre entraîneur principal ou arbre d'entrée (10, 11)
- et l'autre pignon (21, 21A) peut être mis en liaison motrice avec un arbre primaire (32) de l'embrayage de démarrage (26) au moyen d'un embrayage commutable en charge (F) ou synchronisé (20C), disposé à l'intérieur du groupe d'entrée (7).

3. Boîte selon la revendication 1, **caractérisée** en ce que chaque arbre (10, 11; 12; 13) du groupe d'entrée (7) porte une cloche d'embrayage respective (14, 15, 16) d'embrayages commutables en charge (A, C; B, D; F, G) qui sont alignés verticalement les uns avec les autres.

4. Boîte selon la revendication 2, **caractérisée :**
- en ce que les embrayages synchronisés (18C, 20C) ou commutables en charge (B, C) du groupe d'entrée (7) peuvent être actionnés au moyen d'un sélecteur de vitesses commun (83A),
- où ces embrayages, avec les pignons fous (18A, 18B; 20A, 20B) qui leurs sont associés, sont juxtaposés sur le premier arbre de renvoi (12) et ont chacun deux positions de prise,
- où, dans au moins une position de prise sur un pignon fou (20B), l'arbre d' inversion (13) peut être mis en liaison motrice avec l'arbre primaire (32) de l'embrayage de démarrage (26) pour servir à la marche arrière.

5. Boîte selon l'une des revendications 1 à 4, **caractérisée** en ce que tous les embrayages commutables en charge ou synchronisés (A...G; 18C, 20C) se trouvant dans le groupe d'entrée (7), lesquels sont servocommandés au moyen d'un sélecteur de vitesses commun (83, 83A), sont associés à un entraînement de secours (24, 25) à fonctionnement purement mécanique pour la marche avant et la marche arrière.

6. Boîte selon la revendication 5, **caractérisée :**
- en ce que l'entraînement de secours (24, 25) comporte un embrayage positif (25) disposé sur l'arbre entraîneur principal ou arbre d'entrée (10, 11) et actionné manuellement indépendamment du sélecteur de vitesses (83, 83A)
- et qui met en prise, selon le sens de marche, soit un pignon fou (19) disposé du côté d'entrée sur l'arbre entraîneur principal ou arbre d'entrée (10, 11) et un pignon fixe (20) disposé sur le premier arbre de renvoi (12) ou l'arbre primaire (32) de l'embrayage de démarrage (26), soit un pignon fou (24), disposé du côté de la sortie et en liaison motrice avec l'arbre primaire (32), et un manchon baladeur de l'embrayage positif (25), ce manchon étant entraîné par un porte-manchon solidaire en rotation de l'arbre (10, 11).

7. Boîte selon la revendication 1, **caractérisée** en ce que l'arbre d'entrée (11) est agencé en arbre creux entraîné par l'arbre entraineur principal (10) au moyen d'un dispositif amortisseur de vibrations (11A) et disposé concentriquement sur ledit arbre principal et parallèlement au-dessus du premier arbre de renvoi (12).

8. Boîte selon la revendication 1, **caractérisée :**
- en ce que les embrayages synchronisés (40, 41, 53) prévus dans le groupe principal (8) sont formés par des embrayages doubles comportant chacun un porte-manchon fixe en rotation sur leur arbre (39, 52) entre deux pignons fous (42, 43; 44, 45; 54, 55) de différentes tailles pourvus de dentures d' accouplement,
- ces pignons fous étant eux-mêmes engrenés en permanence sur les pignons correspondants de différentes tailles (pignons fixes 48, 49; 50, 51; 46, 47), solidaires en rotation de l'arbre parallèle correspondant (39, 52).

9. Boîte selon la revendication 1, **caractérisée** en ce que l'arbre entraîneur principal ou arbre d'entrée (10, 11), le premier arbre de renvoi (12) et l'arbre d'inversion (13) sont montés dans le groupe d'entrée (7) selon une disposition en triangle à côtés égaux (R).

10. Boîte selon la revendication 3, **caractérisée :**
- en ce que pour chaque cloche d'embrayage (14, 15, 16) du groupe d'entrée (7), il est prévu un embrayage double identique (C, A; D, B; G, F) par arbre (11, 12, 13),
- où une denture extérieure de la cloche d' embrayage (14) est engrenée en permanence à la fois sur une denture extérieure de la cloche d'embrayage (15) et sur une denture extérieure de la cloche d'embrayage (16),
- tandis que la denture extérieure de la cloche d' embrayage (16) est raccourcie axialement de façon à ne pas être engrenée sur la cloche d'embrayage (15).

11. Boîte selon la revendication 3, **caractérisée :**
- en ce que, devant les deux côtés de l'embrayage commutable en charge (C, A) disposé sur l'arbre entraîneur principal et l'arbre d'entrée (10, 11), il est prévu extérieurement des pignons respectifs de différentes tailles (17, 19) dont chacun est solidaire en rotation respectivement de l'un des porte-disques intérieurs dudit embrayage (C, A), où le pignon (17) est un pignon fixe de l'arbre d'entrée et le pignon (19) est un pignon fou de l'arbre entraîneur principal (10),
- en ce qu'un pignon fou (18) est disposé devant le côté d'entrée de l'embrayage commutable en charge (D, B) disposé sur le premier arbre de renvoi (12), et deux pignons fixes de différentes tailles (20, 22) sont disposés coaxialement derrière le côté de sortie dudit embrayage,
- dont le pignon fou (18) du côté d'entrée et le pignon fixe (20), plus proche de l' embrayage, du côté de sortie sont solidaires en rotation respectivement chacun de l'un des porte-disques intérieurs dudit embrayage (D, B),
- en ce que, seulement du côté de sortie de l'embrayage commutable en charge (G, F) disposé sur l'arbre d' inversion (13), il est prévu extérieurement un pignon fou (21) et un pignon fixe (23) de différentes tailles dont le pignon (21) le plus proche de l'embrayage est solidaire en rotation d'un premier porte-disques intérieur dudit embrayage (F) au moyen d'un court arbre creux, et le pignon (23) le plus éloigné de l'embrayage est solidaire en rotation d'un autre porte-disques intérieur dudit embrayage (G) au moyen de l'arbre d'inversion (13) traversant l'arbre creux,
- et en ce que le pignon fixe (17) de l'arbre d'entrée (11) et le pignon fou (19) de l'arbre entraîneur principal (10) sont engrenés en permanence respectivement sur le pignon fou (18) du côté d'entrée et sur le pignon fixe (20) plus proche de l' embrayage, du premier arbre de renvoi (12) du côté de sortie, et
- en ce que le pignon fou (21) et le pignon fixe (23) de l'arbre d'inversion (13) sont aussi engrenés sur les deux pignons fixes (20, 22) du premier arbre de renvoi (12).

12. Boîte selon la revendication 1 **caractérisée :**
- en ce qu'un espace libre (9A) pour le montage optionnel d'une boîte intermédiaire (9) est prévu axialement entre la première cloison intermédiaire (3), située du côté de la sortie du groupe d'entrée (7), et l'embrayage de démarrage (26),
- en ce que la boîte intermédiaire (9) est une boîte à vitesses extra-lentes ayant en entrée un pignon fixe (27) approximativement du diamètre d'un moyeu de l'embrayage de démarrage (26),
- et en ce que la moitié d'entrée, engrenée sur ce pignon fixe (27), d'un pignon double (28, 29) tournant sur un arbre intermédiaire (30) a un diamètre d'au moins 1,6 fois celui dudit pignon fixe (27).

13. Boîte selon la revendication 12, **caractérisée:**
- en ce qu'un embrayage de commutation de la boîte intermédiaire (9) est un embrayage synchronisé ayant des surfaces de friction et des crabots des deux côtés,
- et en ce que le manchon baladeur (36) de cet embrayage transmet dans sa position du côté de l'entrée, un flux de forces direct non démultiplié et, dans sa position du côté de la sortie, un flux de forces indirect surmultiplié ou démultiplié de l'arbre de renvoi (12) à l'arbre primaire (32) de l'embrayage de démarrage (26) ou à l'arbre entraîneur (39) du groupe principal (8).

14. Boîte selon la revendication 12, **caractérisée:**
- en ce que la première cloison intermédiaire (3) comporte dans sa zone inférieure une partie incurvée (105) en forme de coque ouverte vers le haut, ayant du côté de la sortie une seconde zone de paroi (106) qui remonte
- et en ce que le pignon double (28, 29) prévu sur l'arbre intermédiaire (30) de la boîte intermédiaire (9) est entouré en dessous par ladite partie incurvée (105),
- l'arbre intermédiaire (30) étant supporté à la fois dans la première cloison intermédiaire (3) et dans ladite seconde zone de paroi (106) de ladite partie incurvée (105).

15. Boîte selon la revendication 12, **caractérisée :**
- en ce que l'arbre entraîneur (39) du groupe principal (8) enjambe en une pièce l'espace libre (9A) prévu pour le montage de la boîte intermédiaire (9), de la deuxième à la première cloison intermédiaire (4, 3),
- et en ce que l'élément monté fou sur cet arbre et servant à la fois de porte-disques extérieur de la cloche d'embrayage (37) et d'arbre primaire (32) est guidé axialement au moyen d'un palier axial (33, 35) de chaque côté, entre ses faces frontales et un collet radial d'appui (89) du côté de la sortie de l' arbre secondaire (34), ainsi qu'une face frontale du côté d'entrée du moyeu environnant du pignon fixe de sortie (22) du premier arbre de renvoi (12).

16. Boîte selon la revendication 8, **caractérisée :**
- en ce que le groupe principal (8) est pourvu des deux embrayages synchronisés (40, 41) actionnés par deux manchons baladeurs ainsi que des pignons fous correspondants (42, 43 et 44, 45) sur l'arbre entraîneur (39) et du troisième embrayage synchronisé (53) de même construction sur l'arbre de sortie (52),
- où les pignons fous (42, 43 et 44, 45) de l'arbre entraîneur (39) sont en liaison motrice avec des pignons fixes (48, 49 et 50, 51) de l'arbre de sortie (52), et les pignons fous (54, 55) de l'arbre de sortie (52) sont en liaison motrice avec des pignons fixes (46, 47) de l'arbre entraîneur (39).

17. Boîte selon la revendication 1, **caractérisée :**
- en ce qu'il est prévu, sur un arbre secondaire (34) de l' embrayage de démarrage (26) lequel est solidaire en rotation de l'arbre entraîneur (39) du groupe principal (8), un flasque radial portant un porte-disques intérieur (94) s'étendant du côté de la sortie et pourvu de trous radiaux (94A) en direction du paquet de disques (92)
- et en ce qu'un canal à huile (99) situé dans la deuxième cloison intermédiaire (4) débouche horizontalement dans une poche annulaire (100) ménagée à l'intérieur du porte-disques intérieur (94), cette poche étant délimitée axialement par le flasque radial et ouverte du côté du groupe principal,
- ledit canal étant alimenté en combinaison avec des opérations de fermeture de l' embrayage de démarrage (26) pour produire un refroidissement forcé, au moyen d'une amenée de lubrifiant couplée à la commande de l'embrayage de démarrage (26).

18. Boîte selon la revendication 1, **caractérisée :**
- en ce que l'arbre de sortie (52) du groupe principal (8) comporte, sur une extrémité émergeant en direction de l'entrée hors de son palier (82) disposé dans la deuxième cloison intermédiaire (4), un pignon fixe (57) bloqué par un écrou d'axe,
- lequel s'engrène sur un pignon fou (62) d'un embrayage de traction avant disposé sur un arbre (63) d'entraînement d'essieu avant qui comporte des paliers (82) à la fois dans la deuxième (4) et la première (3) paroi intermédiaire,
- où un flasque du pignon fou (62) contient un vérin hydraulique (102) à piston pour ouvrir le paquet de disques à l' encontre d'un ressort à diaphragme et où les disques extérieurs d'une cloche d'embrayage (64) servant de porte-disques sont supportés par le moyeu de celle-ci sur l'arbre d' entraînement d' essieu avant (63).

19. Boîte selon la revendication 18, **caractérisée :**
- en ce que l'embrayage de traction avant est suivi d'un frein (66) pourvu de deux pistons à écartement entre deux paquets de disques,
- dont les disques intérieurs sont solidaires en rotation de l'arbre d' entraînement d' essieu avant (63) et dont les disques extérieurs sont non rotatifs dans un carter de frein (104) supporté par la première cloison intermédiaire (3).

20. Boîte selon la revendication 1, **caractérisée** en ce qu'un pignon fixe (79) est entraîné par l'arbre entraîneur principal ou arbre d'entrée (10, 11) du côté de sortie du groupe d'entrée (7) et s'engrène sur un pignon (80) appartenant à un entraînement parallèle d'une pompe (81).

21. Boîte selon la revendication 1, **caractérisée** en ce qu'il est prévu, dans la zone qui suit l'arbre d'entrée (11) du côté de la sortie, un embrayage de connexion (67) suivi d'un double embrayage de commutation (68) pour entraîner un arbre de prise de mouvement (73) par des liaisons motrices alternatives au moyen de deux pignons de sortie (71, 72) de tailles différentes sur l'arbre de prise de mouvement.

22. Boîte selon la revendication 1, **caractérisée** en ce que le niveau d'huile dans le carter (1) est prévu plus bas que l'axe central de l'arbre de sortie (52) du groupe principal (8).

23. Boîte selon la revendication 1, **caractérisée :**
- en ce que les arbres de tous les groupes sont pourvus d'alésages de passage d'huile (107) conduisant à des points de lubrification ou aux vérins d' actionnement des embrayages commutables en charge (A, B, C, D, F, G),
- ces alésages étant reliés à des raccords d' entrée par des gorges annulaires ménagées dans les cloisons intermédiaires (2, 3, 4) et des alésages radiaux sortant des arbres.

24. Boîte selon la revendication 1, **caractérisée :**
- en ce que les embrayages commutables en charge (C, A) disposés sur l'arbre entraîneur principal ou arbre d'entrée (10, 11) sont commandés au moyen d'alésages de passage d'huile (107) à partir d'un collet annulaire d'amenée d'huile ménagé dans la première cloison intermédiaire (3) près du palier (82) situé du côté de l'arbre de prise de mouvement
- et en ce que les embrayages commutables en charge (D, B et G, F), disposés sur le premier arbre de renvoi (12) et sur l'arbre d' inversion (13) du groupe d'entrée (7) sont commandés au moyen d'alésages de passage d'huile (107) à partir de collets annulaires d'amenée d'huile dans les paliers (82) disposés dans le couvercle frontal (2) du carter, et
- en ce que l' embrayage de démarrage (26), disposé en amont de l'arbre entraîneur (39) du groupe principal (8), est commandé hydrauliquement à travers un conduit de pression (98) disposé dans la deuxième cloison intermédiaire (4).

25. Boîte selon la revendication 1, **caractérisée** en ce que la première cloison intermédiaire (3) est ajustée dans une ouverture du carter et est fixée par des vis contre un flasque (6) à l'intérieur du carter (1) indépendamment des papliers (82) des arbres (39 et 52) du groupe principal (8).
